(19) Europäisches Patentamt European Patent Office Office européen des brevets

(11) **EP 1 890 353 A1**

(12) **EUROPEAN PATENT APPLICATION**

(43) Date of publication:
**20.02.2008 Bulletin 2008/08**

(51) Int Cl.:
*H01M 8/02* *(2006.01)*

(21) Application number: **07114295.4**

(22) Date of filing: **14.08.2007**

(84) Designated Contracting States:
**AT BE BG CH CY CZ DE DK EE ES FI FR GB GR HU IE IS IT LI LT LU LV MC MT NL PL PT RO SE SI SK TR**
Designated Extension States:
**AL BA HR MK YU**

(30) Priority: **18.08.2006 JP 2006222989**
**28.05.2007 JP 2007141014**

(71) Applicant: **NISSAN MOTOR CO., LTD.**
**Yokohama-shi,**
**Kanagawa 221-0023 (JP)**

(72) Inventors:
• **Uchiyama, Noriko**
**c/o NissanTechnical Center**
**Atsugi-shi Kanagawa 243-0192 (JP)**

• **Chiba, Nobutaka**
**c/o Nissan Technical Center**
**Atsugi-shi Kanagawa 243-0192 (JP)**
• **Kano, Makoto**
**Nissan Technical Center**
**Atsugi-shi Kanagawa 243-0192 (JP)**

(74) Representative: **Holmes, Matthew William et al**
**Nissan Motor Manufacturing (UK) Ltd**
**Intellectual Property Department**
**Nissan Technical Centre Europe**
**Cranfield Technology Park**
**Cranfield, Bedfordshire MK43 0DB (GB)**

(54) **Transition metal nitride, fuel cell separator, method for producing transition metal nitride, method for producing fuel cell separator, fuel cell stack and fuel cell vehicle**

(57)     A transition metal nitride comprises a first layer formed of a nitride of a stainless steel containing at least Fe and Cr and a second layer formed on the first layer and having an exposed surface. The second layer is formed of another nitride having contents of components that differ from those in the first layer. The first and second layers have a composition distribution in which a Cr concentration is continuously changed from the first layer to the second layer in a thickness direction of these layers, and the second layer has a nitride deposition protruding from a base portion of an exposed surface. A fuel cell separator comprises a base layer formed of a stainless steel containing at least Fe and Cr and a nitride layer formed of a transition metal nitride as described. Methods of forming transition metal nitrides and fuel cell separators are also included, as is a fuel cell vehicle including a fuel cell stack.

**FIG.1**

EP 1 890 353 A1

**Description**

The invention relates generally to a transition metal nitride, a fuel cell separator, a method for producing the transition metal nitride, a method for producing the fuel cell separator, a fuel cell stack and a fuel cell vehicle.

From the viewpoint of global environmental protection, it has been studied to use a fuel cell substituted in place of an internal combustion engine for vehicle, as a power supply for a motor, and to drive the vehicle by means of the motor. Fuel cells do not require a fossil fuel that bears a depletion problem, and therefore do not produce exhaust gas and the like. Additionally, the fuel cells have such excellent characteristics such as to hardly make noise and to allow an energy recovery efficiency to improve as compared with other energy engines.

Types of fuel cells include those of a solid polymer electrolyte type, a phosphoric acid type, a molten carbonate type and a solid oxide type. A solid polymer electrolyte fuel cell or polymer electrolyte fuel cell (PEFC), one of the above, is such a cell as to be used in the presence of a polymer electrolyte membrane having a proton exchange group as an electrolyte in its molecules. The polymer electrolyte membrane is applied thereto since it functions as a proton-conducting electrolyte when saturated with water. The solid polymer electrolyte fuel cell is activated at relatively low temperatures, and is high in electricity generation efficiency. Further, not only the solid polymer electrolyte fuel cell but also other accessory facilities are compact and lightweight, so that the solid polymer electrolyte fuel cell for use in an electric vehicle or for other various uses is expected.

The solid polymer electrolyte fuel cell includes a fuel cell stack. The fuel cell stack is assembled by stacking a plurality of unit cells (each of which serves as a base unit in an electricity generation due to electrochemical reactions), sandwiching both end portions of the unit cells with end flanges, and then pressingly holding it by a fastening bolt. Thus, the fuel cell stack is formed into a single-piece. A unit cell is comprised of a polymer electrolyte membrane, an anode (or hydrogen electrode) and a cathode (or oxygen electrode), which are respectively bonded to both sides of the membrane, and separators respectively disposed outside the hydrogen and oxygen electrodes.

A fuel cell separator performs a function of electrically connecting the unit cells with each other, and therefore is required to be excellent in electrical conductivity and to be low in contact resistance against components such as a gas diffusion layer.

Further, a solid polymer electrolyte membrane is formed of a polymer having a number of sulfonic acid groups and has a proton conductivity since it uses the wet state sulfonic acid groups as a proton exchange group. Further, as the solid polymer electrolyte membrane has strong acidity, the fuel cell separator is required to have a corrosion resistance against an acidity of sulfuric acid of about pH 2 to 3.

Moreover, a temperature of each gas supplied to the fuel cell is as high as 80 to 90°C. Additionally, H+ is generated in the hydrogen electrode. Further, the oxygen electrode, through which oxygen, air and the like pass, is in an oxidative environment where potential of about 0.6 to 1 V vs SHE is applied. Therefore, similar to the oxygen and hydrogen electrodes, the fuel cell separator is required to have sufficient corrosion resistance to endure a strong acid atmosphere.

There have been attempts to use stainless steel or a titanium material such as industrial pure titanium as the fuel cell separator since they have good electrical conductivity and high corrosion resistance. Under a normal condition, stainless steel has on its surface a closely-packed passive state film of oxide, hydroxide, hydrate thereof or the like containing chromium as its main metallic element. Similarly, titanium has on its surface a closely-packed passive state film of titanium oxide, titanium hydroxide, hydrate thereof or the like. Therefore, stainless steel and titanium have good corrosion resistance.

However, the above-mentioned passive state film causes contact resistance with a carbon paper that is normally used as a gas diffusion layer. With regard to excessive voltage due to resistance polarization within a stationary type fuel cell, exhaust heat can be recovered by cogeneration or the like, so that heat efficiency is improved as a whole. However, as for a fuel cell for use in a vehicle, a heat loss based on the contact resistance has to be exhausted to outside by a radiator through cooling water, which results in reduction of electricity generation efficiency when contact resistance is increased. Moreover, electric efficiency reduction is an equivalent to an increase in heat, and therefore there will be a need for providing a larger cooling system. Accordingly, an increase in contact resistance is a grave issue to be resolved.

In the fuel cell, a theoretical voltage per unit cell is 1.23 V. However, an actual voltage extracted is reduced due to reaction polarization, gas diffusion polarization and resistance polarization, and further is reduced as a current to be extracted is increased. Moreover, since higher power density per unit volume and weight are demanded in the fuel cell for vehicle use, the fuel cell is used at a higher current density, for example, a current density of 1 A/cm$^2$, than the stationary type fuel cell. It is thus considered that, when a current density is 1 A/cm$^2$, an efficiency decrease due to contact resistance between the separator and the carbon paper can be suppressed if the contact resistance is not larger than 40 mΩcm$^2$.

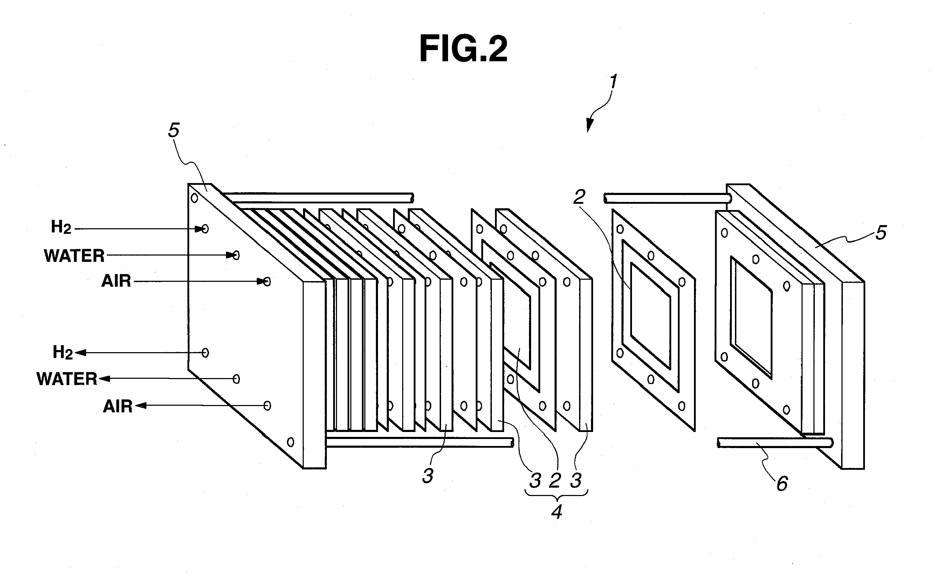

For this purpose, a fuel cell separator is proposed in Japanese Patent Provisional Publication No. 10-2289214, in which the separator is formed by carrying out a press forming on a stainless steel and then directly covering its surface to be contacted with an electrode with a gold-plated layer (see pg. 2 and FIG. 2). Additionally, another fuel cell separator is proposed in Japanese Patent Provisional Publication No. 2001-6713, in which, after stainless steel is formed and machined into the shape of the fuel cell separator, a passive state film on a surface that comes into contact with an electrode thereby producing contact resistance is removed, and then the surface is coated with noble metal or a noble metal alloy (see pg. 2).

Plating or coating the surface of the fuel cell separator with noble metal as is known not only requires effort during manufacturing but also results in high material costs. Moreover, the fuel cell is still required to have low contact resistance against the electrode and high corrosion resistance, so that it is desired to further improve these characteristics. The corrosion resistance as discussed above means a durability where the fuel cell separator maintains an electrical conductive performance even in an oxidative environment at strong acidity. In other words, it is necessary to obtain corrosion resistance in an environment in which a cation is dissolved into humidifying water or generated water by chemical reaction so as to bond to or occupy sulfonic acid groups, which is designed to serve as pathways for protons, thereby lowering an electricity generation characteristic of the electrolyte membrane.

It is an aim of the invention to address this issue and to improve upon known technology. In embodiments of the invention a transition metal nitride low in contact resistance and excellent in corrosion resistance may be obtained. In addition, a fuel cell separator low in contact resistance that occurs between the separator and the electrode and excellent in corrosion resistance may be obtained. Thus, a fuel cell separator high in performance can be more easily produced. Additionally, downsizing and cost reduction may be achieved and flexibility in styling can be ensured whilst increasing mileage. Other aims and advantages of the invention will become apparent from the following description, claims and drawings.

Aspects of the invention therefore provide a transition metal nitride, a fuel cell separator, a fuel cell stack, a vehicle and a method as claimed in the appended claims.

According to another aspect of the invention there is provided a transition metal nitride comprising a first layer formed of a nitride of a stainless steel containing at least Fe and Cr and a second layer formed on the first layer and having an exposed surface, the second layer being formed of another nitride having contents of components that differ from those in the first layer, wherein the first and second layers have a composition distribution in which a Cr concentration is continuously changed from the first layer to the second layer in a thickness direction of these layers and wherein the second layer has at the exposed surface thereof, a nitride deposition protruding from a base portion of the exposed surface.

In an embodiment, the nitride deposition has a height within a range of 10 to 400nm.

In an embodiment, the nitride deposition includes at least one material selected from the group consisting of MN type, $M_{2-3}N$ type and $M_4N$ type crystal structures; and wherein M represents a metal element and N represents nitrogen.

In an embodiment, the first layer has at least an $M_4N$ type crystal structure where a nitrogen atom is located in an octahedral gap at a center of an unit cell of a face-centered cubic lattice formed of at least one transition metal atom selected from the group consisting of Fe, Cr, Ni and Mo, the at least one transition metal atom contained as stainless steel components.

In an embodiment, the first layer has a complex structure in which a $M_4N$ type crystal structure and a $M_{2-3}N$ type crystal structure are laminated; and wherein M represents a metal element and N represents nitrogen.

In an embodiment, the first layer has a complex structure including a matrix of a $M_4N$ type crystal structure and crystal layers of a $M_{2-3}N$ type crystal structure, the crystal layers in the complex structure being formed in the matrix and having an interlayer distance within a range of several tens to several hundreds nm.

In an embodiment, M contained in the crystal structure includes at least one transition metal atom selected from the group consisting of Fe, Cr, Ni and Mo.

According to a further aspect of the invention there is provided a fuel cell separator comprising a base layer formed of a stainless steel containing at least Fe and Cr, and a nitride layer formed of the transition metal nitride according to claim 1, the nitride layer formed on the base layer, the first layer of the transition metal nitride directly connected to the base layer, a crystal lattice of the first layer continuously connected to that of the base layer, a crystal orientation of the first layer a same as that of the base layer, and a crystal grain of the first layer continuously connected to that of the base layer.

In an embodiment, the stainless steel includes an austenitic stainless steel having a Ni content of no less than 8 wt%.

The fuel cell separator may comprise a channel-like flow passage portion through which a fluid used in a fuel cell is passable, a flat portion formed adjacent to the flow passage portion and contactable with a gas diffusion layer of the fuel cell, the nitride layer being selectively formed on a surface of the flat portion and a passive state film of the stainless steel of the base layer formed on a surface of the flow passage portion.

In an embodiment, the passive state film is formed at a portion where a surface of the flow passage portion is bought into contact with at least a generated water.

According to a still further aspect of the invention there is provided a method comprising carrying out a plasma nitriding on a surface of a base material formed of a stainless steel containing at least Fe and Cr while holding the surface at a temperature no less than 425°C, thereby forming a first layer and a second layer, the first layer having at least a $M_4N$ type crystal structure where a nitrogen atom is located in an octahedral gap at a center of an unit cell of a face-centered cubic lattice formed of at least one transition metal atom selected from the group consisting of Fe, Cr, Ni and Mo, the at least one transition metal atom contained as stainless steel components, and the second layer having a deposition protruding from a surface of the base material and continuously connected to the first layer.

The method may comprise carrying out a press-forming of the base material to form a channel-like flow passage portion and a flat portion, a fluid used in a fuel cell being passable through the flow passage portion, the flat portion being formed adjacent to the flow passage portion.

In an embodiment, carrying out the plasma nitriding comprises using a microwave pulse plasma power configured to repeat discharge and interruption of plasma in a cycle of 1 to 1000 μsec.

The method may comprise conducting a masking on an area serving as the channel-like flow passage portion before the plasma nitriding.

According to another aspect of the invention there is provided a fuel cell stack comprising a plurality of fuel cell separators alternatively stacked with a plurality of membrane electrode assemblies, each fuel cell separator including a base layer formed of a stainless steel containing at least Fe and Cr and a nitride layer formed of the transition metal nitride according to claim 1, the nitride layer formed on the base layer, the first layer of the transition metal nitride directly connected to the base layer, a crystal lattice of the first layer continuously connected to that of the base layer, a crystal orientation of the first layer a same as that of the base layer, and a crystal grain of the first layer continuously connected to that of the base layer.

According to yet another aspect of the invention there is provided a vehicle having a fuel cell stack as set out in the preceding paragraph.

For example, a transition metal taught herein includes a first layer formed of a nitride of stainless steel containing at least Fe and Cr and a second layer formed on the first layer and having an exposed surface. In this example, the second layer is formed of another nitride having contents of components that differ from those in the first layer. In the transition metal nitride, the first and second layers have a composition distribution in which a Cr concentration is continuously changed from the first layer to the second layer in a thickness direction of these layers. Additionally, the second layer has at the exposed surface thereof a nitride deposition protruding from a base portion of the exposed surface.

A fuel cell separator according to an embodiment may includes a base layer formed of a stainless steel containing at least Fe and Cr and a nitride layer formed of a transition metal nitride. The nitride layer is formed on the base layer, and the first layer of the transition metal nitride is directly connected to the base layer. Also, a crystal lattice of the first layer is continuously connected to that of the base layer, a crystal orientation of the first layer is the same as that of the base layer, and a crystal grain of the first layer is continuously connected to that of the base layer.

A method according to an embodiment includes carrying out a plasma nitriding on a surface of a base material formed of a stainless steel containing at least Fe and Cr while holding the surface at a temperature not less than 425°C, thereby forming a first layer and a second layer. The first layer has at least a $M_4N$ type crystal structure where a nitrogen atom is located in an octahedral gap at a center of an unit cell of a face-centered cubic lattice formed of at least one transition metal atom selected from the group consisting of Fe, Cr, Ni and Mo, which are contained as stainless steel components. The second layer has a deposition that protrudes from the surface of the base material and is continuously connected to the first layer.

Within the scope of this application it is envisaged that the various aspects, embodiments, examples, features and alternatives set out in the preceding paragraphs, in the claims and/or in the following description may be taken individually or in any combination thereof.

The present invention will now be described, by way of example only, with reference to the accompanying drawings in which:

FIG. 1 is a perspective view showing the appearance of a fuel cell stack constructed of a fuel cell separator according to an embodiment of the invention;

FIG. 2 is a developed view of the fuel cell stack constructed of the fuel cell separator according to FIG. 1;

FIG. 3 is a schematic cross-sectional view showing a configuration of a unit cell that forms the fuel cell stack;

FIG. 4A is a schematic perspective view of the fuel cell separator;

FIG. 4B is a cross-sectional view taken along the plane indicated by lines lllb-lllb of FIG. 4A;

FIG. 4C is a cross-sectional view taken along the plane indicated by lines lllc-lllc of FIG. 4B;

FIG. 5 is a magnification of a nitride layer;

FIG. 6A is a magnification of a portion Va of FIG. 5;

FIG. 6B is a magnification of a portion Vb of FIG. 5;

FIG. 7A is a schematic view of a $M_4N$-type crystal structure;

FIG. 7B shows a $M_{2-3}N$-type hexagonal crystal structure;

FIG. 8 is a schematic cross-sectional view of the fuel cell separator according to an embodiment of the invention;

FIG. 9 is a schematic cross-sectional view of a nitriding apparatus used in a method for producing the fuel cell separator according to an embodiment of the invention;

FIGS. 10A and 10B are schematic cross-sectional views of a base material, showing an example of a masking;

FIGS. 11A and 11B are schematic cross-sectional views of the base material, showing another example of the masking;

FIGS. 12A and 12B are views showing the apparatus of an electric vehicle on which the fuel cell stack according to embodiments of the invention is mounted, more specifically, a side view and a top view of the electric vehicle, respectively;

FIG. 13A is a schematic view showing a method for measuring a contact resistance of a specimen obtained in each example;

FIG. 13B is a schematic view showing an apparatus used in the measurement of the contact resistance;

FIG. 14 is a TEM photograph of a specimen obtained in an Example 1;

FIG. 15 is a magnification of a portion 71a of FIG. 14;

FIG. 16A is a view showing a $\mu$-diffraction electron diffraction that occurs on an outermost surface of the sample obtained in Example 1;

FIG. 16B is a view showing a result of an EDS analysis conducted on the outermost surface of the specimen obtained in Example 1;

FIG. 17A is a view showing a $\mu$-diffraction electron diffraction that occurs on the nitride layer adjacent to a base layer of the sample obtained in Example 1;

FIG. 17B a view showing a result of an EDS analysis conducted on the nitride layer adjacent to the base layer of the specimen obtained in Example 1;

FIG. 18 is a graph of a contact resistance value in certain examples;

FIG. 19 is a graph of an amount of Fe ion elution in certain examples;

FIG. 20 is a cross-sectional photograph taken near a surface of a flat portion of a separator obtained in Example 9;

FIG. 21 is a cross-sectional photograph taken near a bottom of a flow passage portion of the separator obtained in Example 9;

FIG. 22 is a graph showing a result of a scanning Auger electron spectroscopic analysis conducted on the flat portion of the separator obtained in Example 9; and

FIG. 23 is a graph showing a result of the scanning Auger electron spectroscopic analysis conducted on the flow passage portion of the separator obtained in Example 9.

A transition metal nitride, a fuel cell separator, a fuel cell stack, a method for producing the fuel cell separator and a fuel cell vehicle according to embodiments of the invention are next discussed by using an example where they are applied to a solid polymer fuel cell and another example where the solid polymer fuel cell is used.

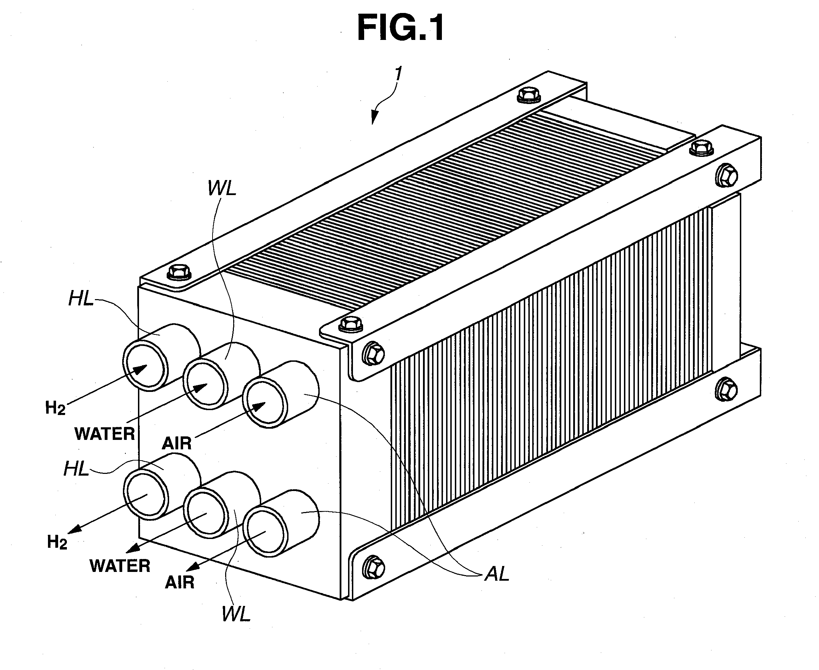

First discussed are a transition metal nitride, fuel cell and fuel cell stack. FIG. 1 is a perspective view showing the appearance of a fuel cell stack configured by using fuel cell separators according to the teachings herein. FIG. 2 is a developed view of the fuel cell stack 1, schematically showing the configuration of the fuel cell stack 1 as shown in FIG. 1 in detail.

As shown in FIG. 2, the fuel cell stack 1 is configured by stacking a plurality of membrane electrode assemblies (MEA) and fuel cell separators 3 alternately. The MEAs are formed by assembling a polymer electrolyte membrane, a hydrogen electrode and an oxygen electrode. One membrane electrode assembly 2 and fuel cell separators 3 disposed on both sides of the membrane electrode assembly 2 configures a unit cell 4 that serves as a base unit in electricity generation made by electrochemical reactions. The solid polymer electrolyte membrane may be a perfluorocarbon polymer membrane having sulfonic acid groups (product name Nafion1128® manufactured by DuPont Kabushiki Gaisya) or the like.

After stacking the membrane electrode assembly 2 and the fuel cell separators 3, end flanges 5 are put at both ends, and then the circumferences thereof are fastened with fastening bolts 6, thereby constructing the fuel cell stack 1. Additionally, the fuel cell stack 1 is provided with hydrogen supply lines HL for supplying fuel gas containing hydrogen to each membrane electrode assembly 2. The fuel gas may be a hydrogen gas $H_2$. The fuel cell stack 1 is further provided with air supply lines AL for supplying air as an oxidant and with cooling water supply lines WL for supplying cooling water.

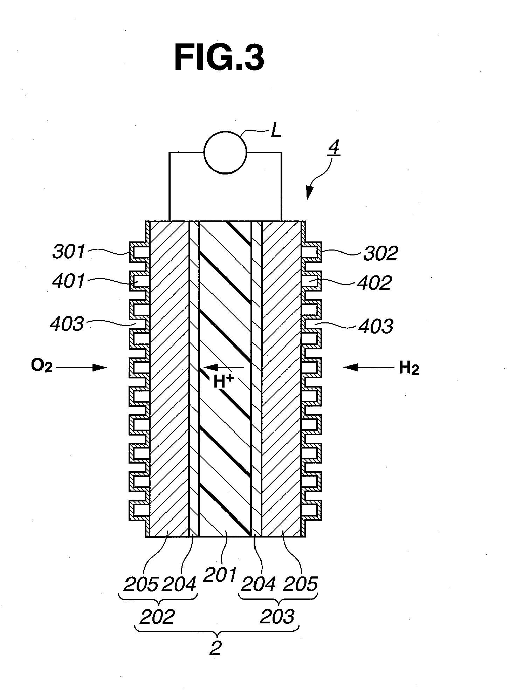

FIG. 3 is a cross-sectional view schematically showing a configuration of the unit cell 4 that forms the fuel cell stack 1. As shown in FIG. 3, the unit cell 4 includes the membrane electrode assembly 2 formed by assembling an oxygen electrode 202 and a hydrogen electrode 203 on either sides of the solid polymer electrolyte membrane 201 and integrating them together. Both the oxygen electrode 202 and the hydrogen electrode 203 have a two-layer construction including a reaction membrane 204 and a gas diffusion layer (GDL) 205, the reaction membrane 204 being in contact with the polymer electrolyte membrane 201. An oxygen electrode side separator 301 and a hydrogen electrode side separator 302 are disposed on the oxygen electrode 202 and the hydrogen electrode 203, respectively, for stacking. An oxygen gas flow passage 401, a hydrogen gas flow passage 402, and a cooling water flow passage 403 are formed by the oxygen electrode side separator 301 and the hydrogen electrode side separator 302.

The unit cell 4 having the above construction is manufactured as follows. The oxygen electrode 202 and the hydrogen electrode 203 are disposed on opposing sides of the solid polymer electrode membrane 201. The oxygen electrode 202, hydrogen electrode 203 and membrane 201 are joined together usually by hot pressing, thereby forming the membrane electrode assembly 2. Then, the separators 301 and 302 are disposed on opposing sides of the membrane electrode assembly 2.

Mixed gas of hydrogen, carbon dioxide, nitrogen and moisture vapor is supplied to the side of the hydrogen electrode 203 of a fuel cell configured by the above unit cells 4, and air and moisture vapor are supplied to the side of the oxygen electrode 202 of the same. Then, electrochemical reactions occur mainly on the contact surfaces between the polymer electrolyte membrane 201 and the reaction membranes 204. This reaction is described more specifically below.

Once oxygen gas and hydrogen gas are supplied respectively to the oxygen gas flow passage 401 and the hydrogen gas flow passage 402 in the unit cell 4, the oxygen gas and hydrogen gas are supplied to the reaction membranes 204 through each gas diffusion layer 205. The following reactions occur in each reaction membrane 204:

$$\text{Hydrogen electrode side: } H2 \rightarrow 2H+ + 2e- ; \qquad (1)$$

and

$$\text{Oxygen electrode side: } (1/2)O_2 + 2H+ + 2e- \rightarrow H_2O. \qquad (2)$$

As shown in FIG. 3, once hydrogen gas is supplied to the hydrogen electrode 203, the reaction of formula (1) progresses, and H+ and e- are produced. H+ moves within the solid polymer electrode membrane 201 in a state of containing water and then flows towards the oxygen electrode 202, while e- flows from the hydrogen electrode 203 to the oxygen electrode 202 through a load L. On the side of the oxygen electrode 202, H+, e- and the supplied oxygen gas completes the reaction of formula (2), thereby generating electric power.

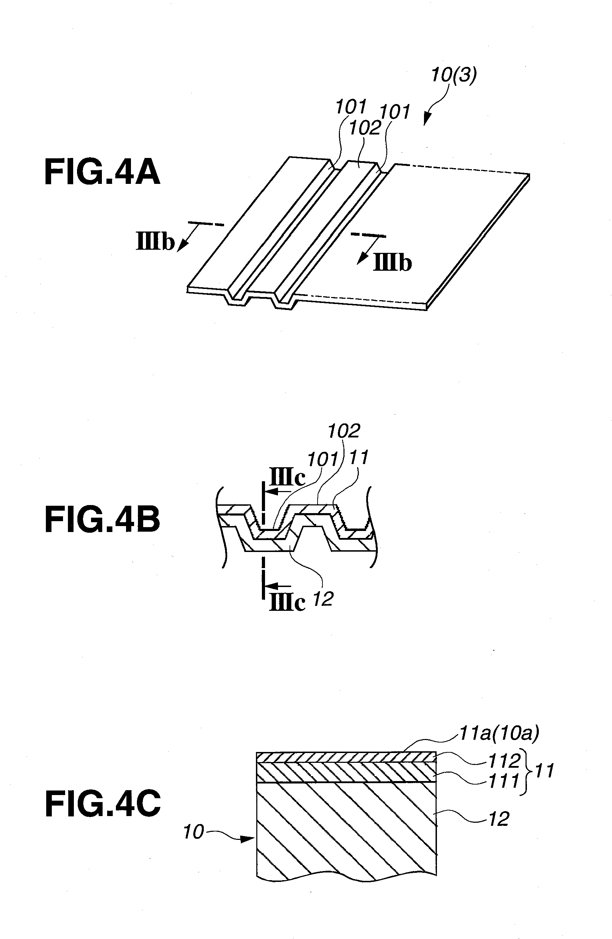

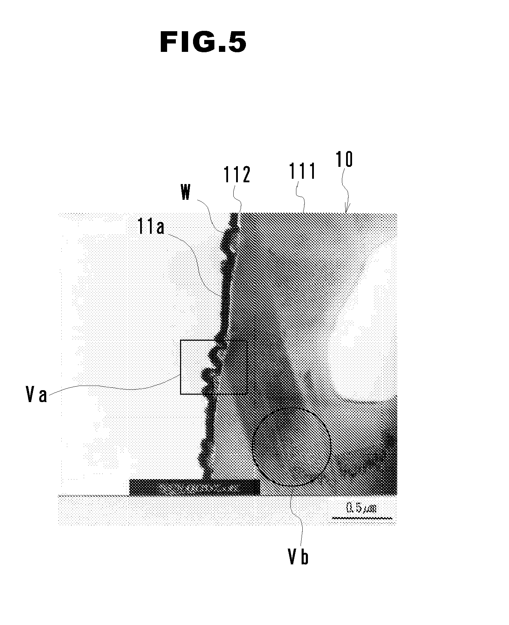

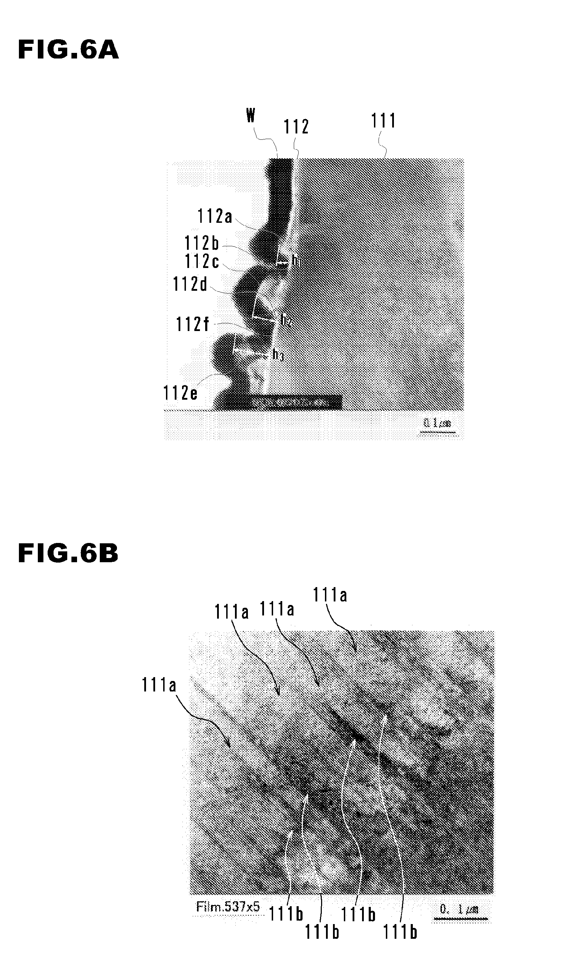

A fuel cell separator 10 that can be used as the fuel cell separator 3 shown in FIG. 2 is discussed below in detail. FIG. 4A is a schematic perspective view of the fuel cell separator 10. FIG. 4B is a cross-sectional view taken along the line IIIb-IIIb of FIG. 4A for understandably emphasizing an important part of the fuel cell separator 10. FIG. 4C is a cross-sectional view taken along the line IIIc-IIIc of FIG. 4B for understandably emphasizing another important part of the fuel cell separator 10. FIG. 5 is a magnification of a nitride layer 11. FIG. 6A is a magnification of a portion Va of FIG. 5, and FIG. 6B is a magnification of a portion Vb of FIG. 5.

As shown in FIG. 4A, and more particularly in FIG. 4B and FIG. 4C, the fuel cell separator 10 is obtained by nitriding a surface of a base material of the fuel cell separator 10, the base material being formed of stainless steel containing at least one of Fe and Cr. Additionally, the fuel cell separator 10 is comprised of a nitride layer 11 formed of a transition metal nitride and formed in a depth direction from the surface of the base material and a base layer 12 or a not-yet-nitrided layer this is not nitrided. Incidentally, for facilitating the understanding of the invention, FIG. 4B and FIG. 4C differ from the actual fuel cell separator in terms of the thickness of the nitride layer 11 and the base layer 12. Therefore, the fuel cell separator 10 is not limited to the size of the illustrated nitride layer 11 and base layer 12 and to the ratio of both.

As shown in FIG. 4A, the fuel cell separator 10 is formed with a plurality of passage portions 101 having a rectangular shape in cross section. The passage portions 101 are portions that form the oxygen gas flow passage 401 or the hydrogen gas flow passage 402 of the unit cell 4, and are formed by press-forming or the like. The fuel cell separator 10 has a flat portion 102 between the passage portions 101 adjacent to each other, the flat portion 102 performing the function of connecting the passage portions 101 to each other. The fuel cell separator 10 of this embodiment is provided with the nitride layer 11 extending along the outer surface of the passage portions 101 and the flat portion 102. The flat portion 102 is to be brought into contact with the gas diffusion layer of the membrane electrode assembly 2 when the fuel cell separators 3 and the membrane electrode assembly 2 are stacked alternately.

As shown in the schematic cross-sectional view of FIG. 4C and the photograph of FIG. 5 showing the metallographic structure, the nitride layer 11 formed of transition metal nitride is provided with a first nitride layer (a first layer) 111 formed on the base layer 12 and a second nitride layer 112 continuously formed on the first nitride layer 111 and having a surface portion 11 a that is an exposed surface of the nitride layer 11. Incidentally, for making the surface portion 11 a clear at the time of observation of the metallographic structure, a tungsten film W is disposed on the second nitride layer 112. The surface portion 11 a of the nitride layer 11 is nitrogen solid solution made by plasma nitriding on the surface of the base material formed of stainless steel. The first nitride layer 111 is formed of nitride of the base material made of stainless steel, while the second nitride layer 112 is formed of nitride differs from that of the first nitride layer 111 in content of the components. The fuel cell separator 10 has such a composition distribution that Cr concentrations are continuously changed from the first layer to the second layer in thickness direction thereof.

As shown in the photograph of FIG. 6A showing the metallographic structure, the second nitride layer 112, which includes the surface portion 11 a of the nitride layer 11, has nitride depositions 112a, 112c and 112e that irregularly protrude from a base portion of the surface portion 11 a. In the example shown in FIG. 6A, deposition 112a protrudes to have a height of h1 at the maximum from a bottom surface 112d, which is a base portion of the surface portion 11a of the nitride layer 11. Deposition 112c protrudes to have a height of h2 at the maximum from the bottom surface 112d. Deposition 112e protrudes to have a height of h3 at the maximum from the bottom surface 112d. The maximum heights h1, h2 and h3 from the base portion of the surface portion 11 a of the nitride layer 11, respectively of the depositions 112a, 112c and 112e, are within a range of 10 to 400nm. The depositions have a crystal structure selected from MN type, $M_{2-3}N$ type and $M_4N$ type, as will be discussed below. M is at least one transition metal selected from the group consisting of Cr, Fe, Ni and Mo, while N is nitrogen.

The stainless steel used as the base material and serving as the base layer 12 of the fuel cell separator 10 is a stainless steel containing at least Fe and Cr. Particularly, austenitic stainless steel containing at least 8 wt% or more of Ni is advantageous. Examples of austenitic stainless steel containing at least 8 wt% or more of Ni includes SUS304, SUS310S, SUS316L and SUS317L. The reason for selecting austenitic stainless steel is its excellent press-formability. In a case where stainless steel is used as the base material of the fuel cell separator 10, projections and depressions in the gas flow passage and the cooling water flow passage are press-formed. When the base material structure is austenite, as single-phase in the above case, it is excellent in ductility, drawability and press-formability. Additionally, in a case where plasma nitriding is made on the base material or austenite as single-phase, the amount of nitrogen solid solution on a surface of the base material is so increased that transition metal nitride containing high concentration nitrogen is easily formed on the surface of the base material by plasma nitriding. In a case where the base material is ferritic or martensitic stainless steel having a Ni content of less than 8 wt% or having no Ni, ductility, drawability and press-formability are lowered.

In a case where the base material contains Mo, Mo has an effect of thinly forming the passive state film over the whole surface of the nitride layer, so as to suppress metal ions from eluting while providing good electrical conductivity.

One of characteristics of a transition metal nitride and fuel cell separator according to certain embodiments of the invention is that the second nitride layer 112 has depositions that irregularly protrude from the base portion of the surface portion 11 a of the nitride layer 11 such as depositions 112a, 112c and 112e. The depositions have at least one crystal structure of MN type, $M_{2-3}N$ type and $M_4N$ type.

A nitride compound of MN type, $M_{2-3}N$ type and $M_4N$ type, forming these depositions, is a nitride compound in which nitrogen intrudes into a fcc or fcp crystal structure and is excellent in electrical conductivity since it has a metallic bond and a covalent bond, as will be discussed specifically in the below description of the first layer 111, particularly with regard to those of $M_{2-3}N$ type and $M_4N$ type. Therefore, transition metal nitride and the fuel cell separator according to the present invention achieve a low contact resistance required in fuel cell separators. Particularly when the surface portion 11 a of the nitride layer 11, which serves as an outermost surface 10a of the fuel cell separator 10, has a structure including such projections and depressions as to have a maximum height difference (Dmax) or the height of the depositions 112a, 112c and 112e from the surface portion 11 a of the nitride layer 11 of no more than 400nm in a state where the fuel cell separator 10 is installed to the fuel cell stack 1, a contact surface between the fuel cell separator 10 and the gas diffusion layer is to become into an infinitesimal point contact in the oxidative environment. This facilitates acceptance of electrons since an oxide film forms on the contact surface with difficulty. As a result of this, the transition metal nitride and the fuel cell separator according to these embodiments are excellent in electrical conductivity and maintain a low contact resistance value. Additionally, these transition metal nitrides and fuel cell separators maintain a low contact resistance without forming a novel metal plating layer such as gold plating, thereby achieving cost reduction.

In certain embodiments, the above-discussed maximum height difference in the depositions of the second layer 112 is within a range of 10 to 400nm. In a case where the maximum height difference is less than 10nm, the contact surface formed between the fuel cell separator and the gas diffusion layer becomes a surface and not a infinitesimal point, so that the contact area is increased, thereby facilitating formation of the oxide film on the contact surface formed between the fuel cell separator and the gas diffusion layer. When the oxide film is formed, acceptance of electrons becomes difficult to be continued. Further, when the maximum height difference of the depositions 112a, 112 and 112e is larger than 400nm, the depositions are to be Cr-based nitride such as CrN, and not nitride such as of MN type that contains Fe and the like. Specifically, Cr is concentrated in the protruding depositions 112a, 112c and 112e formed on the outermost surface so that the second nitride layer 112 has Cr-based nitride of NaCl type as a main component. As a result of this, Cr-based oxide film is easily and stably formed on the protruding depositions 112a, 112c and 112e formed on the surface portion 11 a, thereby making acceptance of electrons difficult and increasing the contact resistance value.

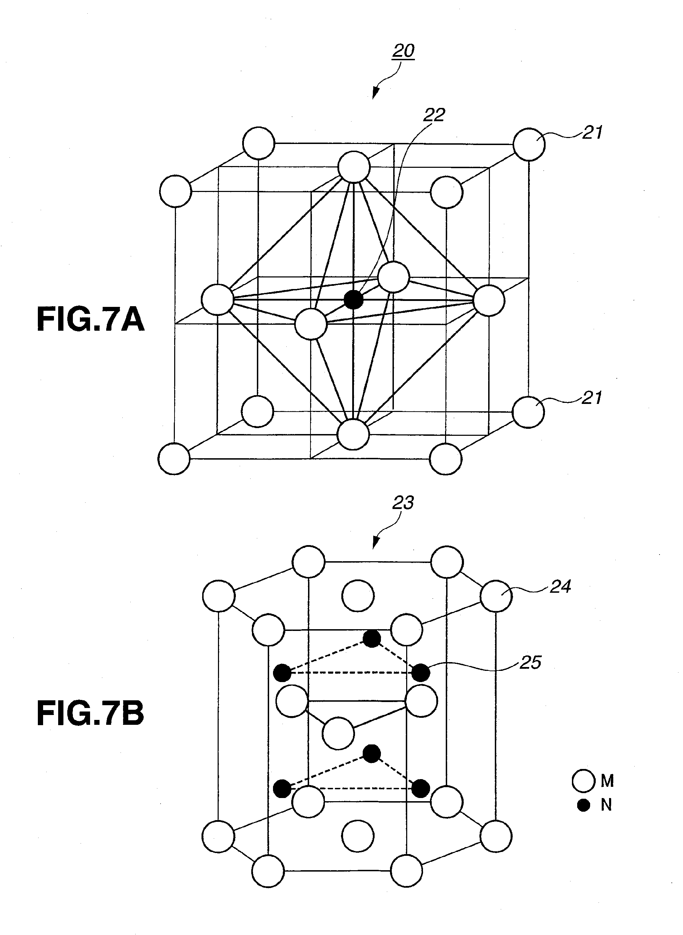

The first nitride layer 111 of the nitride layer 11 of the transition metal nitride and the fuel cell separator can have an $M_4N$-type crystal structure where a nitrogen atom is located in the octahedral gap at the center of the unit cell of a face-centered cubic lattice formed of at least one transition metal atom selected from the group consisting of Fe, Cr, Ni and Mo, which are contained as stainless steel components. The $M_4N$-type crystal structure is shown in FIG. 7A.

As shown in FIG. 7A, a $M_4N$-type crystal structure 20 is a structure where a nitrogen atom 22 is located in the octahedral gap of at the center of the unit cell of a face-centered cubic lattice formed of transition metal atoms 21 selected from Fe, Cr, Ni and Mo. In this $M_4N$-type crystal structure 20, M represents transition metal atoms 21 selected from Fr, Cr, Ni and Mo, while N represents the nitrogen atom 22. The nitrogen atom 22 occupies a fourth of the octahedral gap of the M4N-type crystal structure 20. In other words, the $M_4N$-type crystal structure 20 is an interstitial solid solution in which the nitrogen atom 22 is interstitially present in the octahedral gap at the center of the unit cell of a face-centered cubic lattice formed of transition metal atoms 21. When expressed in a space lattice of a cubic crystal, the nitrogen atom 22 is located in a lattice coordinate (1/2, 1/2, 1/2) of each unit cell. Further, in this $M_4N$-type crystal structure, the transition metal atoms 21 include an alloy in which Fe is partially substituted by other transition metal atoms such as Cr, Ni and Mo, though the transition metal atoms 21 are comprised almost exclusively of Fe in this embodiment.

The $M_4N$-type crystal structure realizes strong covalent bonds between transition metal atoms 21 and the nitrogen atom 22 while maintaining metallic bond among the transition metal atoms 21, thereby lowering reactivity against oxidation of each transition metal atom. Therefore, the first nitride layer 111 having the $M_4N$-type crystal structure 20 is chemically stable even in an oxidative environment within the fuel cell while having an electrical conductivity that the fuel cell separator 10 utilizes, a chemical stability that maintains the function of electrical conductivity in the presence of the separator 10 and corrosion resistance. Further, the fuel cell separator 10 in which the first nitride layer 111 having such a crystal structure is directly formed on the base layer 12 can maintain low contact resistance against the gas diffusion layer used as a common fuel cell, even if placed in an oxidative environment. Additionally, contact resistance can be limited without directly forming a novel metal plating layer such as gold plating on the surface in contact with the electrode including the gas diffusion layer, thereby achieving cost reduction over conventional techniques. Moreover, the nitride layer 111, including the $M_4N$-type crystal structure, has chemical stability so as to maintain a low value of contact resistance between the separator and the electrode in an oxidative environment while achieving cost reduction in the fuel cell separator 10.

In certain advantageous embodiments, the transition metal atoms 21 are mainly Fe but may include an alloy obtained by partially substituting atoms of other transitional metals such as Cr, Ni or Mo for Fe. Also, the transition metal atoms 21 constructing the $M_4N$-type crystal structure can be in irregular arrangement. With an irregular arrangement, partial molar free energy of each transition metal atom is reduced, thus reducing an activity of each transition metal atom. With this, reactivity within the nitride layer 14 to oxidation of each transition metal atom is also reduced, and the first nitride layer 111 thus stays chemically stable even in an oxidative environment within the fuel cell. Furthermore, since contact resistance between the separator 10 and the electrode including the gas diffusion layer is low, durability is thereby improved. Additionally, a low contact resistance is maintained without forming a noble metal plating layer on the separator 3 serving as the contact surface against the electrode, thereby achieving cost reduction. In these embodiments, the transition metal atoms 21 can be increased in mixing entropy with the irregular arrangement, or an activity of each transition metal atom can be lower than a value estimated based upon Raoult's law.

In the $M_4N$-type crystal structure 20, in a case where the atom ratio of Cr to Fe is high, nitrogen contained in the nitride layer is bonded to Cr in the nitride layer 111, and a Cr-based nitride such as CrN (that is, the NaCl-type nitride compound) becomes a main component, thereby lowering corrosion resistance of the first nitride layer 111. Accordingly, the transition metal atoms 21 are mainly Fe in these embodiments. This type of crystal structure is considered to be nitride having the fcc or fct structure with high-density transition and twin crystal, high hardness of not less than 1000 HV, and supersaturated nitrogen solid solution (Yasumaru and Kamachi, Journal of Japan Institute of Metals, 50, pp. 362-368, 1986). The closer to the surface, the higher the concentration of nitrogen becomes. Additionally, CrN does not become a main component, so that Cr, which is effective for corrosion resistance, is not reduced while corrosion resistance is thus maintained even after nitriding. Where the first nitride layer 111 has the $M_4N$-type crystal structure 20 such that an N atom is located in the octahedral gap at the center of the unit cell of a face-centered cubic lattice formed of at least one of metal atoms selected from Fe, Cr, Ni and Mo, corrosion resistance between the separator and the electrode can be even in a strong acid atmosphere of pH 2 to 3.

The first nitride layer 111 has a complex structure in which the $M_{2-3}N$-type crystal structure and the $M_4N$-type crystal structure are laminated. In a case of including the $M_{2-3}N$-type crystal structure (ε phase), transition metal atoms contained in the first nitride layer 111 realizes a strong covalent bond between the transition metal atoms and nitrogen atoms while maintaining metallic bond among the transition metal atoms. Therefore, there is conformity between the first nitride layer 111 and the second nitride layer 112 formed on the first nitride layer 111 and serving as an outermost surface layer of the nitride layer 11. A crystal orientation is the same as that of the second nitride layer 112, so that crystal grains are in a row while any defect is made between the first nitride layer 111 and the second nitride layer 112. With this, acceptance of electrons is facilitated to improve electrical conductivity.

FIG. 7B shows a $M_{2-3}N$-type hexagonal crystal structure 23 included in the first nitride layer 111. As shown in FIG. 7B, the $M_{2-3}N$-type hexagonal crystal structure 23 is comprised of transition metal atoms 24 and nitrogen atoms 25, and is larger than the $M_4N$-type crystal structure 20 in nitrogen concentration. Therefore, a nitride layer having a crystal layer including the $M_{2-3}N$-type hexagonal crystal structure 23 contains a lot of nitrogen as compared with a nitride layer of single-phase having the $M_4N$-type crystal structure 20 alone, so as to be high in concentration of nitrogen atoms within the nitride layer. Then, an activity of each transition metal atom is further lowered. Therefore, reactivity to oxidation of each transition metal atoms within the nitride layer is reduced. Hence, the first nitride layer 111 is chemically stable even in oxidative environment within the fuel cell, thereby obtaining a nitride layer having electrical conductivity for a separator used in the fuel cell, chemical stability for maintaining the function of electrical conductivity in the use of the fuel cell and corrosion resistance. Further, when covalent bonds between transition metal atoms and nitrogen atoms are strengthened, thereby reducing and chemically stabling reactivity to oxidation of transition metal atoms, it becomes possible to maintain the function of electrical conductivity and to further improve corrosion resistance.

The first nitride layer 111 is a complex structure including a matrix of the $M_4N$-type crystal structure 20 and the crystal layers of the $M_{2-3}N$-type hexagonal crystal structure 23 formed within the matrix. The crystal layers can have an interlayer distance within a range of several tens to several hundreds nm. FIG. 6B shows an example of the first nitride layer 111 having such a complex structure. The first nitride layer 111 is comprised of a two phase complex structure in which a matrix 1 11 a of the $M_4N$-type crystal structure, which appears to be white in FIG. 6B, and a crystal layer 111b of the $M_{2-3}N$-type hexagonal crystal structure, which appears to be dark in FIG. 6B, are alternately arranged. An interlayer distance between the crystal layer 111b and the crystal layer 111b is within a range of from several tens to several hundreds nm. Chemical stability of the first nitride layer 111 is ensured with the complex structure in which the $M_{2-3}N$-type hexagonal crystal structure is included in the matrix of the $M_4N$-type crystal structure. Additionally, in a case where the first nitride layer 111 has an interlayer distance between the layers within a range of several tens to several hundreds nm, a laminated-structure finely formed at a nanometer level is bought into a two-phase equilibrium. With this, free energy is lowered so as to lower activity so that the first nitride layer 111 becomes low in reactivity to oxidation in order to have chemical stability. Therefore, it comes to suppress oxidation particularly in a strong acidity atmosphere.

A fuel cell separator described herein comprises the base layer 12 consisting of stainless steel containing at least Fe and Cr and the nitride layer 11 formed of transition metal nitride and formed on the base layer 12 as previously described. The first layer 111 of the nitride layer 11 formed of transition metal nitride is directly connected to the base layer 12. Additionally, the crystal lattice of the first layer 111 is continuously connected to that of the base layer 12. The crystal orientations are the same, and the crystal grains are in a row. Such a structure is obtained by plasma nitriding the surface of the base material formed of stainless steel. Between the first layer 111 of the nitride layer 11 and the base layer 12, the crystal lattice is in a row, the crystal orientation is the same, and the crystal grains are in a row, Accordingly, the first layer 111 of the nitride layer 11 and the base layer 12 are in conformity to make strong covalent bond. With this, any defect is made between the nitride layer 11 and the base layer 12, thereby facilitating acceptance of electrons and improving electrical conductivity.

Thus, this arrangement is applied to transition metal nitrides and fuel cell separators taught herein, thereby lowering contact resistance that occurs between the separator and the electrode and achieving a low cost fuel cell separator. Moreover, the fuel cell stack according to certain embodiments includes fuel cell separators taught herein so as to maintain high electricity generation efficiency without any loss of electricity generation performance while achieving downsizing and cost reduction.

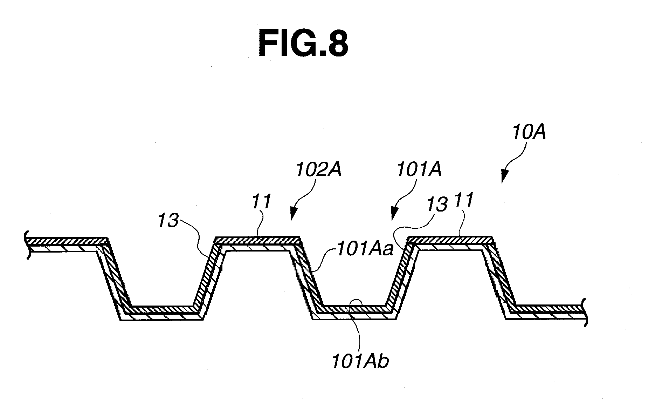

Referring now to FIG. 8, an embodiment of the fuel cell separator according to the invention will be discussed. The fuel cell separator 10A of this embodiment, shown in FIG. 8 with a schematic cross-sectional view, has channel-like flow passage portion 101 A and flat portion 102A. The flow passage portion 101 A is a portion through which a fluid such as oxygen gas and hydrogen gas can pass within the fuel cell stack 1. The flat portion 102A is a portion that can be brought into contact with the gas diffusion layer of the membrane electrode assembly 2 within the fuel cell stack 1. In the fuel cell separator 10A of this embodiment, the nitride layer 11 is selectively formed on the surface of the flat portion 102A. Additionally, a passive state film 13 of the base layer 12 formed of stainless steel is formed on the surface of the flow passage portion 101A. The nitride layer 11 may be formed to have the same composition and the same structure as the nitride layer 11 as shown in FIG. 4. Further, the base layer 12 also may be formed to have the same composition and the same structure as the nitride layer 11 as shown in FIG. 4.

The fuel cell separator 10A as shown in FIG. 8 has an excellent electrical conductivity since the nitride layer 11 is selectively formed on the flat portion 102A and serves as a portion required to have electrical conductivity of the fuel cell separator. Moreover, the passive state film 13 is formed on the surface of the flow passage portion 101A and serves as a portion where a low contact resistance is not required. Thus, the fuel cell separator 10A has the same excellent corrosion resistance that the passive state film 13 has. Therefore, the fuel cell separator 10A of this embodiment achieves both an excellent electrical conductivity and an excellent corrosion resistance, which are desirable to the fuel cell separator at a higher level.

Though FIG. 8 shows an example of an embodiment of the fuel cell separator 10A in which the passive state film 13 is formed on both a side surface 101Aa and a bottom surface 101Ab of the flow passage portion 101A, a mode of forming the passive state film 13 on the flow passage portion 101A is not limited to the example shown in FIG. 8. In certain embodiments, the passive state film 13 is made of stainless steel formed on the surface of the flow passage portion 101A at a portion brought into contact with at least generated water. Though it depends on orientation of the fuel cell stack 1 when the fuel cell stack 1 is installed in the vehicle and the like, passive state film 13 is formed at least on the portion brought into contact with generated water in a case where the portion brought into contact with generated water is either the side surface 101Aa or the bottom surface 101Ab.

Next, a method for producing an embodiment of a transition metal nitride and a method for producing the fuel cell separator are discussed. In a method for producing a transition metal nitride and a method for producing a fuel cell separator, plasma nitriding is carried out on a surface of a base material formed of a stainless steel containing at least Fe and Cr while holding the surface at a temperature of not less than 425° C, thereby forming a first nitride layer (or a first layer) and a second nitride layer (or a second layer). The first nitride layer can have at least a $M_4N$ type crystal structure where a nitrogen atom is located in an octahedral gap at a center of an unit cell of a face-centered cubic lattice formed of at least one transition metal atom selected from the group consisting of Fe, Cr, Ni and Mo, which are contained as stainless steel components. The second nitride layer can have a deposition that protrudes from the surface of the base material and is continuously connected to the first layer. M is at least one transition metal atom selected from the group consisting of Fe, Cr, Ni and Mo. With this method, a transition metal nitride including the first and second layers can be easily obtained. Additionally, there can be obtained a fuel cell separator including a base layer formed of stainless steel containing at least one transition metal atom selected from the group consisting of Fe, Cr, Ni and Mo and a nitride layer formed on the base layer. In the thus obtained fuel cell separator, the nitride layer includes a first nitride layer formed on the base layer and the second nitride layer formed connected to the first nitride layer and having a surface portion of the nitride layer. The second nitride layer has depositions protruding from the base portion of the surface of the nitride layer, the depositions having a height that can be within a range of 10 to 400nm, measured from the base portion of the nitride layer.

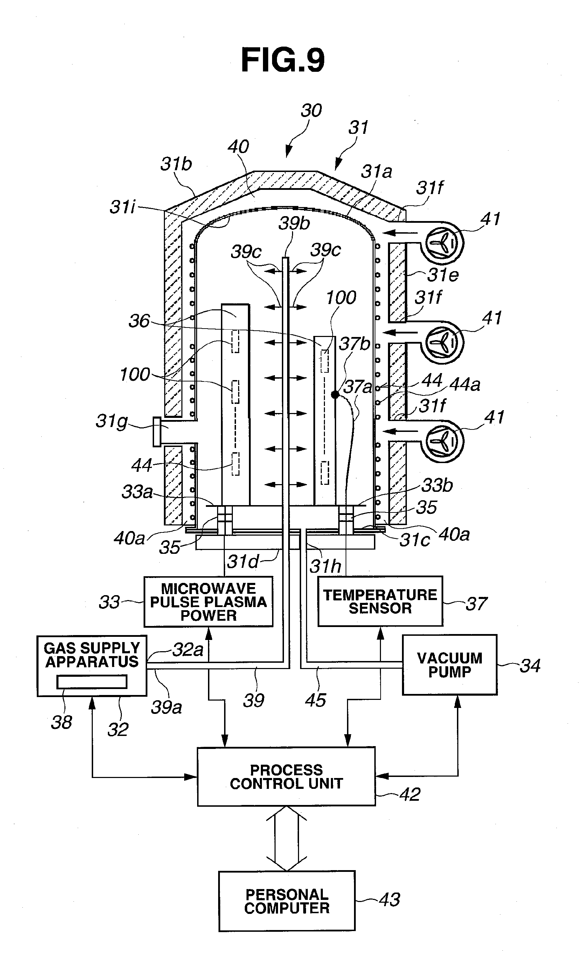

In plasma nitriding, an object to be nitrided is set as a cathode, the object being a stainless steel foil in certain embodiments of the invention. A part of gas component is ionized by glow discharge, i.e., low-temperature non-equilibrium plasma produced by application of a direct current voltage. Then, the ionized gas component within non-equilibrium plasma collides at a very fast rate with the surface of the object to be nitrided. Thus the object is nitrided. FIG. 9 is a schematic cross-sectional view of an example of a nitriding apparatus used in the method for producing the transition metal nitride and the method for producing the fuel cell separator according to the present embodiment.

A nitriding apparatus 30 as shown in FIG. 9 includes a nitriding batch furnace 31, a vacuum pump 34 discharging gas from a vacuum nitriding container 31 a disposed in the nitriding furnace 31, a gas supply apparatus 32 supplying gas to the vacuum nitriding container 31 a, plasma electrodes 33a and 33b charged to high voltage in order to generate plasma within the vacuum nitriding container 31a, a microwave pulse plasma power 33 supplying direct currents converted to pulses of a high frequency of 45 kHz to the electrodes 33a and 33b, and a temperature sensor 37 detecting temperature within the vacuum nitriding furnace 31. The nitriding furnace 31 has an air vent with valve and insulating outer container 31 b formed of insulating material and housing the vacuum nitriding container 31 a therein.

The vacuum nitriding container 31 a has an insulator 35 at its bottom 31 c for holding the plasma electrodes 33a and 33b at high potential. The plasma electrodes 33a and 33b include thereon supporters 36 formed of stainless steel. The supporters 36 support a base material 100 formed of stainless steel foil. The base material 100 is provided by press-forming with a channel-like flow passage portion through which fuel or oxidant pass and with a flat portion, and the base material 100 is machined to be shaped into a separator.

The gas supply apparatus 32 has a gas chamber 38 and a gas supply path 39, and the gas chamber 38 is provided with openings (not shown). The openings respectively communicate with a hydrogen gas supply line, a nitrogen gas supply line and an argon gas supply line, each of which is provided with a gas supply valve (not shown). The gas supply apparatus 32 further has a gas supply opening 32a communicating with one end 39a of the gas supply path 39, the opening 32a being provided with a gas supply valve (not shown). The gas supply path 29 extends into the vacuum nitriding container 31 a in such a manner as to hermetically pass through a bottom 31 d of the outer container 31 b of the nitriding furnace 31 and the bottom 31 c of the vacuum nitriding container 31a, thereby reaching a standing portion 39 that stands vertically. The standing portion 39 has a plurality of openings 39c for ejecting gas into the vacuum nitriding container 31 a.

A pressure of gas within the vacuum nitriding container 31a is detected by a gas pressure sensor (not shown) provided at the bottom 31c of the vacuum nitriding container 31a. The vacuum nitriding container 31a is heated by a lead wire 44a of a heater 44 of induction-type or resistance-type, the lead wire 44a being wound around the periphery of the vacuum nitriding container 31a.The vacuum nitriding container 31a and the outer container 31b define air flow passage 40 therebetween. The outer container 31b includes at its side wall 31e an air blower 41 for blowing air flown into the air flow passage 40 from an opening 31f of the side wall 31e of the outer container 31b. The air flow passage 40 has an opening 40a through which air flows out thereof.

In the vacuum nitriding container 31a, discharging is achieved with a discharge pipe 45 communicating with an opening 31h in the bottom 31c of the vacuum nitriding container 31a.

A temperature detector 37 passes through the vacuum nitriding container 31a, the bottoms 31c and 31d of the outer container 31b and the plasma electrodes 33a and 33b, thereby being connected to a temperature sensor 37b (such as a thermocouple) through a signal path 37a.

The microwave pulse plasma power 33 is turned on and off by receiving control signals from a process control unit 42. A potential difference between each base material 100 and a ground side object (e.g. an inner wall 31i of the vacuum nitriding container 31a) equates to a voltage supplied by the microwave pulse plasma power 33. The process control unit 42 can be, for example, a microcomputer including a central processing unit (CPU), input and output ports (I/O), random access memory (RAM), keep alive memory (KAM), a common data bus and read-only memory (ROM) as an electronic storage medium for executable programs and certain stored values.

The gas supply apparatus 32, the vacuum pump 34, the temperature detector 37 and the gas pressure sensor are also controlled by the process control unit 42. The process control unit 42 can be controlled by a personal computer 43.

Plasma nitriding employed in this embodiment is now discussed more specifically.

First of all, the base material 100 serving as an object to be treated is disposed within the vacuum nitriding container 31a. Then, the furnace is vacuated to be less than 1 Torr (=133 Pa). Mixed gas of hydrogen and argon is introduced into the vacuum nitriding container 31a, and then voltage is applied thereto at the degree of vacuum of 665 to 2128 Pa in a state where the base material 100 is a cathode while the inner wall 31i of the vacuum nitriding container 31a is an anode. In this case, a glow discharge occurs on the base material 100. With the glow discharge, the base material 100 is heated and nitrided.

As a first operation of the method for producing the fuel cell separator or the transition metal nitride according to this embodiment, a spatter cleaning is carried out in order to remove a passive state film made on the surface of the base material 100 formed of stainless steel foil. During the spatter cleaning, hydrogen ions, argon ions and the like ionized by the introduced gas collide with the surface of the base material 100, thereby removing oxide film made on the base material 100. The oxide film is mainly Cr.

In a second operation carried out after the spatter cleaning, mixed gas of hydrogen and nitrogen is introduced into the nitriding furnace 31. Then voltage is applied thereto, thereby making the glow discharge on the base material 100, which is serving as the cathode. At this time, ionized nitrogen collides with and breaks into the surface of the base material 100 and then diffuses into the base material 100. This forms a continued nitride layer including a second layer having depositions protruding from the surface of the base material 100 and a first layer having at least the $M_4N$-type crystal structure. Concurrently with formation of the nitride layer, the oxide film formed on the surface of the base material 100 is removed with a reduction reaction in which ionized hydrogen reacts with oxygen present on the surface of the base material 100.

With plasma nitriding, the surface of the base material 100 is strongly and locally heated at infinitesimal area as a result that N ions collide with acceleration by voltage applied thereto against the surface of the base material 100, while metal atoms such as Fe, Cr and Mo present on the surface of the base material 100 are spattered (or vaporized). The metal atoms separated by the action of spattering from the surface of the base material 100 are bonded to nitrogen highly activated within plasma in the vicinity of the surface of the base material 100. Then, absorption is carried out to irregularly form nitride depositions on the surface of the base material 100.

When the base material has a relatively high temperature of 425 to 450°C during plasma nitriding, a collision energy of N ions against the surface of the base material becomes high so as to improve a spattering effect on the outer surface. Additionally, an atomic weight of Fe separated from the surface of the specimen is increased so as to increase an amount of iron nitride absorbed to the surface. With this, nitride containing nitrogen in high concentration and having the $M_{2-3}N$-type hexagonal crystal structure and/or the $M_4N$-type cubic crystal structure is deposited.

In plasma nitriding, the reaction that occurs on the surface of the base material 100 is not an equilibrium reaction but a non-equilibrium reaction, which allows rapid formation of the transition metal nitride having an $M_4N$-type cubic crystal structure containing a high concentration of nitrogen according to certain embodiments of the invention. The nitride is formed from the surface of the base material 100 in a depth direction and has sufficient electrical conductivity and corrosion resistance.

Meanwhile, in a case where a nitriding method such as gas nitriding in which nitriding progresses under atmospheric pressure and under the equilibrium reaction is employed, it becomes difficult to remove the passive state film formed on the surface of the base material. Additionally, because of the equilibrium reaction it takes a long time to produce the $M_4N$-type cubic crystal structure on the surface of the base material, and it becomes difficult to obtain a desired nitrogen concentration. This lowers electrical conductivity due to the presence of the oxide film on the surface of the base material, and chemical stability, so that in the nitride and nitride layer obtained in the nitriding method it is difficult to maintain electrical conductivity in a strong acidic environment.

As described herein, a microwave pulse plasma power is employed as a power supply. A power supply commonly used for plasma nitriding is a direct-current power supply, and not the microwave pulse plasma power. In the direct-current power supply, direct voltage is applied, and then a discharged waveform current is detected by a current detector and controlled by a thyristor to be a certain current. In this common power supply, glow discharge is continued, and the temperature of the base material is changed within a range of plus or minus 30°C when measured by a radiation thermometer. Meanwhile, the microwave pulse plasma power is comprised of a high-frequency interrupting circuit in the presence of direct current and the thyristor. With this circuit, the waveform of direct current becomes a pulse waveform in which glow discharge repeats on and off. In this case, when plasma nitriding in the use of the microwave pulse plasma power that repeats discharging and interrupting is carried out in such a manner as to set times for discharging plasma and for interrupting plasma to 1 to 1000 $\mu$sec, temperature variation of the base material is within a range of plus or minus about 50°C. In order to obtain such a transition metal nitride as to have a high nitrogen concentration, accurate temperature control is required. Therefore, according to certain embodiments, a microwave pulse plasma power having little temperature variation of the base material is used. The power can repeat the plasma discharge and interruption in a cycle of 1 to 1000 $\mu$sec.

Nitriding can be carried out while maintaining the surface of the base material at a temperature of 425°C. In this case, the height of depositions from the surface of the nitride layer is within a range of from 10 to 400nm while obtaining a nitride layer in which the depositions have a crystal structure selected from MN type, $M_{2-3}N$ type and $M_4N$ type.

The method for producing the fuel cell separator according to certain embodiments can include making press-forming on the base material to form a flow passage portion and a flat portion adjacent thereto, the flow passage portion serving as a path of fuel or oxidant. Though the formation of the flow passage portion and the flat portion may be carried out after or before nitriding, it is advantageously carried out before nitriding in certain embodiments. In this case, any defect such as cracks is not made on the nitride layer.

According to a method for producing transition metal nitrides of the present embodiment, a transition metal nitride high in corrosion resistance and low in contact resistance is easily obtained. Further, methods for producing a fuel cell separator according to embodiments of the invention produce a fuel cell separator excellent in durability. Electricity generation performance is easily obtained by plasma nitriding. This facilitates production of a high-performance fuel cell separator, thereby lowering the production cost.

In forming the nitride layer on the surface of the base material 100, the nitride layer may be selectively formed on the flat portion of the base material by selectively conducting masking on the flow passage portion of the base material 100. By carrying out masking, a selective formation of the nitride layer on the flat portion is easily achieved.

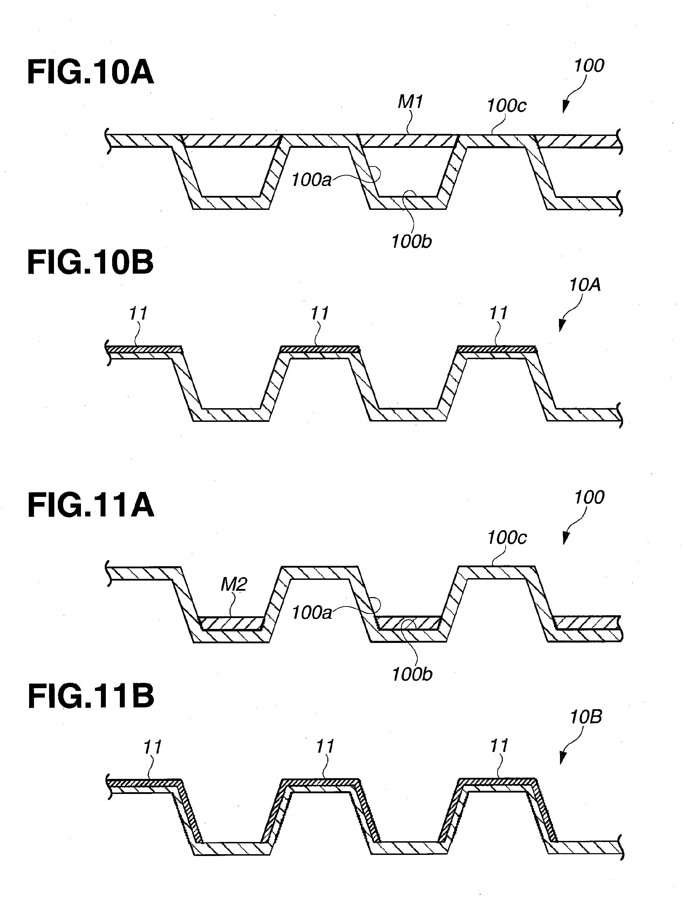

FIGS. 10B and 10B are schematic cross-sectional views of the base material for explaining an example of masking. As shown in FIG. 10A, a mask M1 is previously prepared. The illustrated mask M1 is shaped into a thin plate and includes holes formed to have the same size and the same shape as a flat portion 100c of the base material 100 such that a side face 100a and a bottom face 100b of the flow passage portion of the base material 100 are masked. The mask M1 is placed such that the flat portion 100c is exposed at the hole of the mask M1. Nitriding is carried out under this state. FIG. 10B shows the fuel cell separator 10A obtained by nitriding the base material 100. As shown in FIG. 10B, the nitride layer 11 is selectively formed on the flat portion of the fuel cell separator 10A. A surface of the fuel cell separator 10A, other than the flat portion, is covered with a passive state film formed of stainless steel, although this is not shown.

FIGS. 11 B and 11 B are schematic cross-sectional views explaining another example of masking. A mask M2 as shown in FIG. 11A is shaped into a thin plate and includes holes formed to have the same size and the same shape as a flat shape of the side face 100a and the flat portion 100c of the flow passage portion of the base material 100 such that only the bottom face 100b of the flow passage portion of the base material 100 is masked. The mask M2 is placed such that the flat portion 100c and the side face 100a of the flow passage portion are exposed at the hole of the mask M2. Nitriding is carried out under this state. FIG. 11 B shows a fuel cell separator 10B obtained by nitriding the base material 100. As shown in FIG. 11 B, the nitride layer 11 is selectively formed on the flat portion of the fuel cell separator 10B and on the side face of the flow passage portion. A bottom surface of the flow passage portion of the fuel cell separator 10B is covered with a passive state film formed of stainless steel, although this is not shown.

As an example of a fuel cell vehicle according to an embodiment of the invention, there is next discussed a fuel cell electric vehicle that has as its power source the fuel cell stack 1 according to the above-mentioned embodiments.

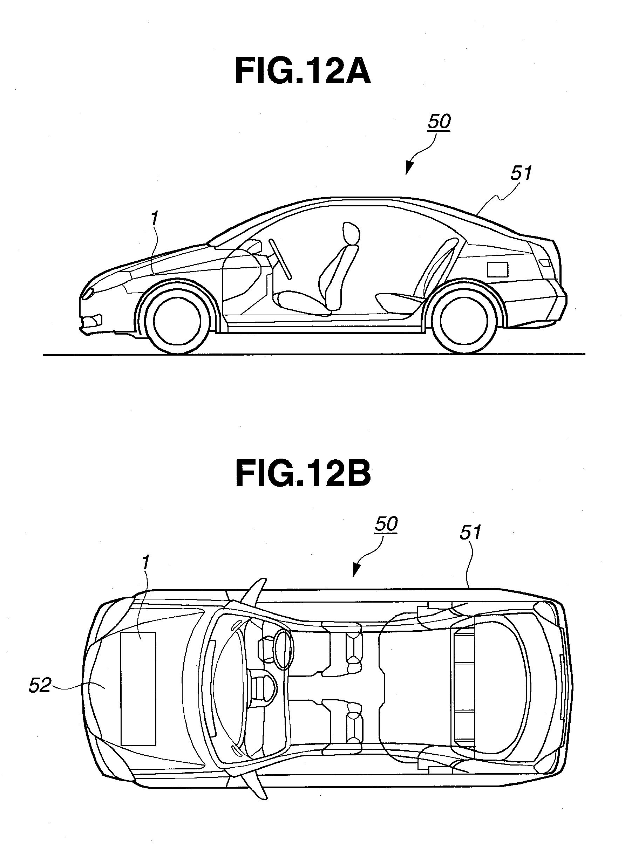

FIG. 12 shows an appearance of a fuel cell electric vehicle 50 on which the fuel cell stack 1 is mounted. FIG. 12A is a side view of the fuel cell electric vehicle 50, and FIG. 12B is a top view of the fuel cell electric vehicle 50. As shown in FIG. 12B, an engine compartment 52 is formed at the front of a vehicle 51 by combining and welding front side members and hood ridges on the right and left sides, as well as a dash lower member, which connects the right and left hood ridges, including the front side members, to each other. In the fuel cell electric vehicle 50 as show in Figs. 12A and 12B, the fuel cell stack 1 is mounted in the engine compartment 52.

By mounting on a mobile vehicle such as an automotive vehicle the fuel cell stack 1 according to the teachings herein that has a good power generation efficiency, an improvement of fuel efficiency of the fuel cell electric vehicle 50 can be achieved. Moreover, by mounting the small-sized and light-weighted fuel cell stack 1 on the vehicle, the vehicle weight can be reduced to save fuel and to deliver more mileage. Furthermore, by mounting the small-sized fuel cell on the mobile vehicle or the like as a power source, the usable interior space of the vehicle becomes wider, thereby securing design freedom.

Though the electric vehicle is described as an example of the fuel cell vehicle, the invention is not limited to such vehicle as an electric vehicle and can be applied to engines of an aircraft and the like that require electric energy.

Hereinafter are discussed Examples 1 to 5 and Comparative Examples 1 to 3 of a transition metal nitride and a fuel cell separator according to certain embodiments of the invention. Each example is discussed for examining effectiveness of the transition metal nitrides and the fuel cell separators taught herein. These were prepared by treating each specimen under a condition different from a row material, and therefore the invention is not limited to these examples.

First, preparation of specimens is described. In each of the Examples and Comparative Examples, vacuum annealing materials thickness 0.1 mm and width 100x100 mm of Japan Industrial Standards (JIS)-accredited SUS304L (18Cr-9Ni-low C), SUS316L (18Cr-12Ni-2Mo-low C), SUS310S (25Cr-20Ni-low C) were used as a base material upon being subjected to press-forming to be shaped into a separator. After degreasing the vacuum annealing materials press-formed to be shaped into the separator, plasma nitriding was carried out by glow discharge, using microwave pulse direct-current, on both sides of the vacuum annealing materials. As for the plasma nitriding conditions, nitriding temperature was 350 to 500°C, nitriding time was 60 minutes, gas mixing ratios in nitriding was N2:H2 = 7:3, and a processing pressure was 3 Torr (or 399 Pa). The temperature was varied. Note that plasma nitriding was not performed in Comparative Example 1. In Comparative Examples 2 and 3, the vacuum annealing materials press-formed to be shaped into the separator were subjected to plasma nitriding by using direct-current glow discharge. Table 1 shows types of steel used as the base materials, plasma power supplies used and base material temperatures used during nitriding.

TABLE 1

|  | Base Material | Used Plasma Power Supply | Base Material Temperature during Nitriding (°C) |
|---|---|---|---|
| Example 1 | SUS310S | microwave pulse | 425 |
| Example 2 | SUS310S | microwave pulse | 435 |
| Example 3 | SUS310S | microwave pulse | 450 |
| Example 4 | SUS316L | microwave pulse | 425 |
| Example 5 | SUS304L | microwave pulse | 425 |
| Comparative Example 1 | SUS310S | - | - |
| Comparative Example 2 | SUS310S | direct current | 350 |

(continued)

|  | Base Material | Used Plasma Power Supply | Base Material Temperature during Nitriding (°C) |
|---|---|---|---|
| Comparative Example 3 | SUS310S | direct current | 400 |

Each of the thus obtained specimens was evaluated in the following method.

First discussed is the observation of the nitride layer and measurements of the height of protruding portions.

As a specimen to be observed with a transmission electron microscope, a thin layer specimen was prepared in the vicinity of a surface of a nitride layer obtained in each of Examples 1 to 5 and Comparative Examples 1 to 3. A focused ion beam (FIB) available from Hitachi, Ltd. under the trade name of FB2000A was used as an apparatus in the preparation. The specimen was prepared by employing an FIB-μ sampling method. This specimen was observed by using a field emission transmission electron microscope (available from Hitachi, Ltd. under the trade name of HF-2000) at 200kV.

Next discussed is the identification of the crystal structure of the nitride layer.

Identification of the crystal structure of the nitride layer was carried out by using the field emission transmission electron microscope (available from Hitachi, Ltd. under the trade name of HF-2000), an EDS analyzer at an acceleration voltage of 200kV and a μ-diffraction electron diffraction. In identification of the crystal structure, as a first step, measurement of spacing between crystal faces was carried out by using a photograph showing electron diffraction. More specifically, a distance between lattice planes d was determined by formula (3) obtained by combining formula (1) and Bragg's formula (2) as below:

$$R = Ltan2\theta; \qquad\qquad (1)$$

$$\lambda = 2dsin\theta; \qquad\qquad (2)$$

and

$$d = n\lambda L(1/R); \qquad\qquad (3)$$

wherein R is the center of a diffraction pattern and L is the length of the camera.

Then, crystal structure was identified by the distance between lattice planes d.

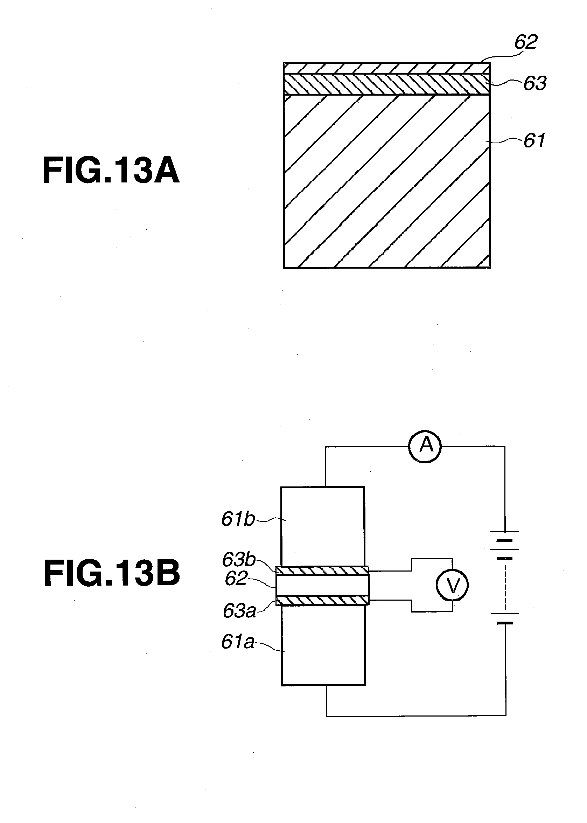

Next, contact resistance of the separator obtained in each of Examples 1 to 5 and Comparative Examples 1 to 3 was measured before and after the corrosion resistance test by using a pressure-loading contact electrical resistance measuring device made by ULVAC-RIKO, Inc. under the trade name of TRS-2000SS. As shown in FIG. 13A, a carbon paper 63 was interposed between an electrode 61 and a specimen 62. As shown in FIG. 13B, a construction of an electrode 61 a, common carbon paper 63a, specimen 62, carbon paper 63b and electrode 61 b was made. Then, electrical resistance was measured twice when a current of 1 A/cm$^2$ at pressure on a measuring surface of 1.0 MPa. An average value of both contact resistance measurements was obtained to be a contact resistance value. The contact resistance value was measured twice, i.e., before and after the corrosion resistance test as will be discussed below. The contact resistance value measured after the corrosion resistance test evaluated a corrosion resistance in an oxidative environment that simulates an environment to which the fuel cell separator is exposed within the fuel cell. The carbon papers used were those on which platinum catalyst carried by carbon black was applied (carbon paper TGP-H-090 made by Toray Industries Inc., with a thickness of 0.26 mm, an apparent density of 0.49 g/cm$^3$, a void volume of 73% and thickness volume resistivity of 0.07 Ωcm$^2$). The electrodes used were Cu-made electrodes having a diameter of 20 mm.

Next discussed is evaluation of the corrosion resistance. In a fuel cell, an electric potential of about 1 V versus SHE at the maximum is applied to an oxygen electrode side in comparison with a hydrogen electrode side. In addition, a solid polymer electrolyte membrane exerts proton conductivity by saturating a polymer electrolyte membrane having a proton exchange group such as a sulfonic acid group within a molecule, and exhibits strong acidity. Therefore, corrosion resistance was evaluated by constant-potential electrolysis testing, that is, an electrochemical method where the specimen is measured in terms of contact resistance upon being held for a certain period of time while applying predetermined constant electric potential thereto. More specifically, a specimen was prepared by cutting the center of each specimen to have a size of 30 mmx30 mm. The thus prepared specimen was then held for 100 hours in a sulfuric acid aqueous solution of pH 2 at temperature of 80° C, and at electric potential of 1 V vs. SHE.

Table 2 shows a surface pattern, the height of protruding portion and crystal structures of the nitride layer (the first nitriding layer) adjacent to the outermost surface (the second nitriding layer), and of the base material. Table 3 shows the contact resistance values obtained before and after the corrosion resistance test.

TABLE 2

| | Surface Pattern | Height of Protruding Portion (nm) | Crystal Structure | |
|---|---|---|---|---|
| | | | Outermost Surface | Nitride Layer adjacent to Base Material |
| Example 1 | protruding | 21 | $MN+M_{2-3}N+M_4N$ | $M_4N +M_{2-3}N$ |
| Example 2 | protruding | 158 | $MN+M_{2-3}N+M_4N$ | $M_4N +M_{2-3}N$ |
| Example 3 | protruding | 400 | $MN+M_{2-3}N$ | $M_4N +M_{2-3}N$ |
| Example 4 | protruding | 16 | $MN+M_{2-3}N+M_4N$ | $M_4N +M_{2-3}N$ |
| Example 5 | protruding | 12 | $MN+M_{2-3}N$ | $M_4N$ |
| Comparative Example 1 | -- | -- | -- | -- |
| Comparative Example 2 | not protruding | -- | MN | $M_4N +M_{2-3}N$ |
| Comparative Example 3 | not protruding | -- | MN | $M_4N +M_{2-3}N$ |

TABLE 3

| | Constant Resistance Value Before Corrosion Resistance Test ($m\Omega cm^2$) | Constant Resistance Value After Corrosion Resistance Test ($m\Omega cm^2$) |
|---|---|---|
| Example 1 | 7 | 22 |
| Example 2 | 7 | 20 |
| Example 3 | 7 | 24 |
| Example 4 | 8 | 26 |
| Example 5 | 10 | 29 |
| Comparative Example 1 | 765 | 2639 |
| Comparative Example 2 | 84 | 125 |
| Comparative Example 3 | 8 | 238 |

The specimen obtained in Comparative Example 1 has a surface including a y-type crystal structure in which a surface of the separator was coated with a stable passive state film and was not coated with the nitride layer. Accordingly, the contact resistance values obtained before and after the corrosion resistance test were high. Additionally, specimens obtained in Comparative Examples 2 and 3 were formed with the nitride layer adjacent to the base layer. However, the pattern shown in the outermost surface had no protrusion and therefore was flat. In a case where protruding depositions are not formed on the outermost surface, a stable passive state film can be formed easily. Therefore, the contact resistance value obtained after the corrosion resistance test took a high value exceeding 100 $m\Omega cm^2$, and the nitride layer did not exhibit a sufficient electrochemical stability in an oxidative environment.

Meanwhile, each specimen obtained in Examples 1 to 5 was formed with the nitride layer that includes depositions containing crystal structure of the MN type, $M_{2-3}N$ type or $M_4N$ type and having a protruding portion height of 12 to 400nm. This is considered to allow an excellent electrical conductivity and maintaining a low contact resistance value.

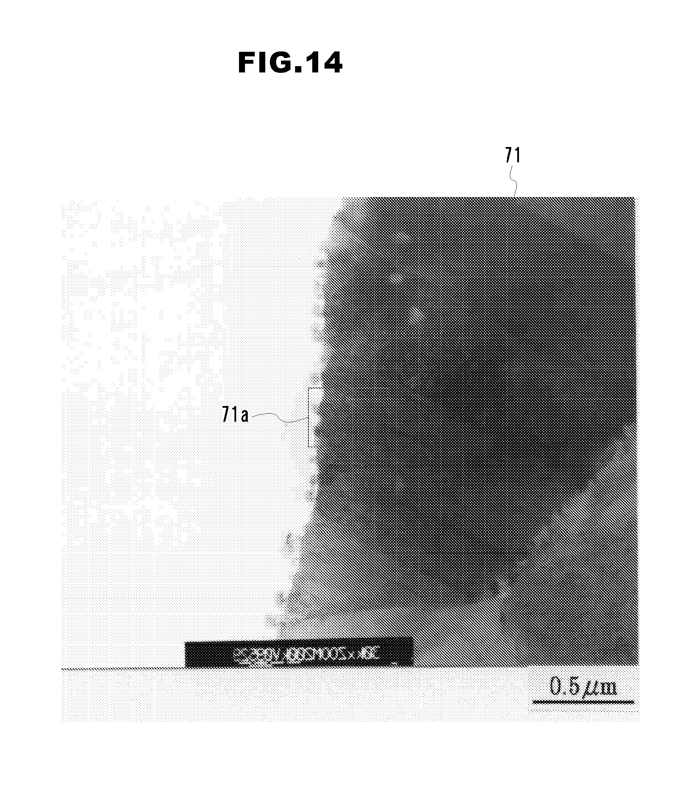

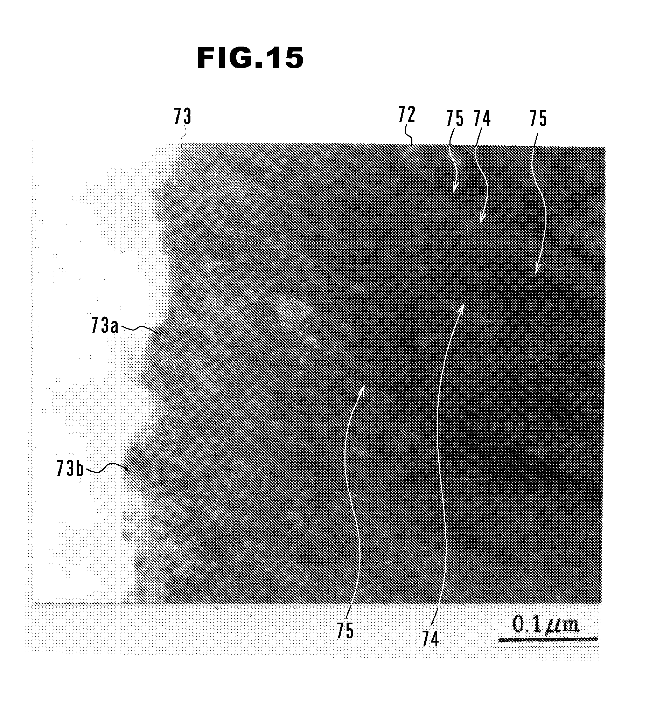

FIG. 14 shows a TEM photograph of the specimen obtained in Example 1 scaled up 30000 times. FIG. 15 shows a photomacrograph of a portion 71 a of FIG. 14 scaled up 200000 times. The specimen obtained in Example 1 had a nitride layer 71. Further, an outermost surface 73 of the nitride layer 71 had depositions 73a and 73b containing crystal structure of the MN type, $M_{2-3}N$ type or $M_4N$ type, as will be discussed below.

The highest of the protruding portions of the depositions had a height of 21 nm. In FIG. 15, a nitride layer 72 (the first nitride layer) was observed immediately below the outermost surface 73. The nitride layer 72 has a two-phase complex structure in which layer structures are alternately arranged. There was also observed a matrix 74 having an $M_4N$ type crystal structure that appears to be white in FIG. 15, and a crystal layer 75 having a layered $M_{2-3}N$ type crystal structure that appears to be dark in FIG. 15 and is formed within the matrix 74. An interlayer distance between the crystal layer 75 and the crystal layer 75 was within a range of several tens to several hundreds nm.

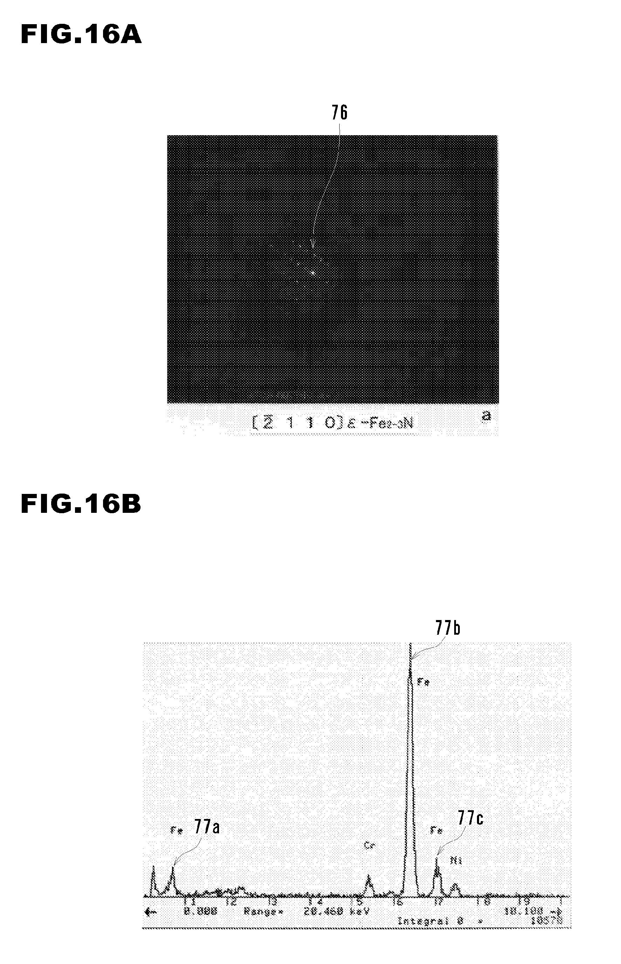

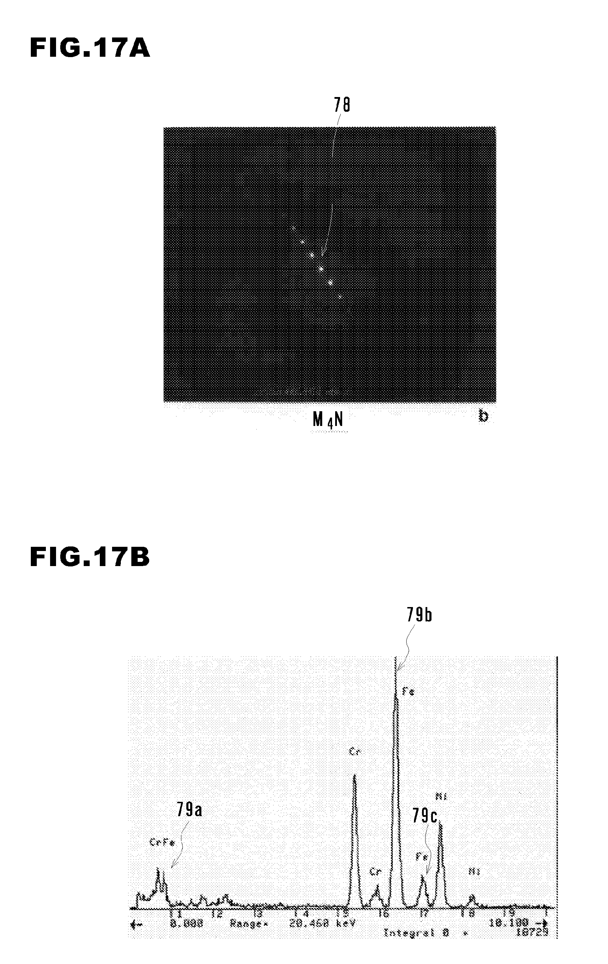

FIG. 16A shows μ-diffraction electron diffraction of the outermost surface of the specimen obtained in Example 1. FIG. 16B shows results of EDS analysis of the outermost surface of the specimen obtained in Example 1. Further, FIG. 17A shows μ-diffraction electron diffraction of the nitride layer adjacent to the base layer of the specimen obtained in Example 1. FIG. 17B shows results of EDS analysis of the nitride layer adjacent to the base layer of the specimen obtained in Example 1. By measuring an interlayer distance among white points 76 as shown in FIG. 16A, it was found that the protruding deposition formed on the outermost surface of the specimen obtained in Example 1 included crystal structure of MN type, $M_{2-3}N$ type or $M_4N$ type. Furthermore, from the EDS analysis results as shown in FIG. 16B, it was found that peaks 77a, 77b and 77c derived from iron were high in strength. With this, it was further found that the nitride layer adjacent to the base layer of the specimen obtained in Example 1 contained iron as a main component.

Each specimen of Examples 1 to 5 had a contact resistance value not larger than 30 mΩcm$^2$ both before and after the corrosion test. Contact resistance values before and after the corrosion test varied little. Without being bound to any theory, a reason why each specimen of Examples 1 to 5 is thus excellent in electrochemical stability in an oxidative environment is that an outermost layer of the nitride layer is covered at its surface with the protruding depositions, and that the depositions are protrusions whose protruding portion has a height of within a range of from 10 to 400nm. Moreover, the complex structure in which the matrix having the $M_4N$-type crystal structure and the crystal layer having the $M_{2-3}N$-type crystal structure are laminated is stably formed adjacent to the base layer without lowering the Cr concentration in the base layer due to the depositions, so that the $M_4N$-type crystal structure realizes strong covalent bonds between the transitional metal atoms and the nitrogen atom while maintaining metallic bond among the transition metal atoms.

With this, conformity among the protruding deposition, the $M_4N$-type crystal structure and the base layer is greatly maintained to obtain chemical stability, electrical conductivity used by the fuel cell separator and chemical stability for maintaining the function of electrical conductivity in the use of the fuel cell. Further, the transition metal atoms constructing a face-centered cubic lattice are irregularly mixed so as to lower an activity to reduce partial molar free energy of each transition metal composition. This decreases reactivity within the protruding depositions and the first nitride layer to oxidation of each transition metal atom so that the protruding depositions and the first nitride layer are considered to have chemical stability. Accordingly, each specimen of Examples 1 to 5 had a low contact resistance value both before and after the corrosion test and had good corrosion resistance.

In a fuel cell, a theoretical voltage per unit cell is 1.23 V, but a voltage which can be actually extracted is reduced due to reaction polarization, gas diffusion polarization and resistance polarization. The larger a current to be extracted is, the lower the voltage becomes. Moreover, as higher power density per unit volume and weight is demanded, a fuel cell for a vehicle use is used at a high current density, for example, a current density of 1 A/cm$^2$, in comparison with a stationary-type fuel cell. It is considered that, when the current density is 1 A/cm$^2$, an efficiency decrease due to contact resistance between a separator and a carbon paper can be suppressed if the contact resistance is 20 mΩcm$^2$, in other words, if a measurement value obtained by the apparatus as shown in FIG. 13B is 40 mΩcm$^2$ or lower. In Examples 1 to 5, contact resistance values were lower than 30 mΩcm$^2$. Therefore, there can be formed a fuel cell stack small-sized and reduced in cost and in which an electromotive force per unit cell is high while making electricity generation performance excellent.

Hereinafter, an embodiment of a fuel cell separator differs from Examples 1 to 5 in terms of height of the protruding depositions formed on the surface of the nitride layer.

In each of the Examples and Comparative Examples, vacuum annealing materials thickness 0.1 mm and width 100x100 mm of Japan Industrial Standards (JIS)-accredited SUS304L and SUS316L were used as a base material subjected to press-forming to be shaped into a separator. After degreasing the vacuum annealing materials press-formed to be shaped into the separator, plasma nitriding was carried out on both sides of the vacuum annealing materials by direct-current glow discharge. As for the plasma nitriding conditions, nitriding temperature was 500° C, nitriding time was 60 minutes, gas mixing ratios in nitriding was N2:H2 = 7:3 and a processing pressure was 3 Torr (or 399 Pa). Table 4 shows the type of stainless steel used as the base material, the used plasma power supply and a base material temperature during nitriding.

TABLE 4

|  | Base Material | Used Plasma Power | Base Material Temperature during Nitriding (°C) |
|---|---|---|---|
| Example 6 | SUS304L | direct current | 500 |
| Example 7 | SUS316L | direct current | 500 |

Each of the thus obtained specimens was evaluated in the same method as the above-discussed Examples 1 to 5.

TABLE 5

|  | Surface Pattern | Height of Protruding Portion (nm) | Crystal Structure | |
|---|---|---|---|---|
|  |  |  | Outermost Surface | Nitride Layer adjacent to Base Material |
| Example 6 | protruding | 543 | MN | $M_4N + M_{2-3}N$ |
| Example 7 | protruding | 559 | MN | $M_4N$ |

TABLE 6

|  | Before Corrosion Resistance Test ($m\Omega cm^2$) | After Corrosion Resistance Test ($m\Omega cm^2$) |
|---|---|---|
| Example 6 | 9 | 524 |
| Example 7 | 9 | 457 |

The specimens of Examples 6 and 7 had the nitride layer formed adjacent to the base layer, and the protruding depositions were formed on the outermost surface so as to be excellent in electrical conductivity and to maintain a low contact resistance. However, the protruding portion of the deposition formed on the outermost surface of each of Examples 6 and 7 had a height of larger than 400nm. In this case, distribution of components such as Fe and Cr tends to occur locally among the protruding depositions. In other words, the protruding depositions formed on the outermost surface are to have a part in which Cr is extremely concentrated or a Cr concentration is extremely low. As a result of this, it is considered that the contact resistance value after the corrosion test was increased in comparison with Examples 1 to 5 since the protruding depositions low in Cr concentration tends to be oxidized in a strong acid atmosphere of pH 2 to 3.

There will be discussed hereinafter an embodiment of the fuel cell separator in which the nitride layer is selectively formed on the flat portion of the fuel cell separator. First the preparation of specimens is described.

In Examples 8 to 10 and Comparative Example 4, a vacuum annealing material thickness 0.1 mm and width 100x100 mm of Japan Industrial Standards (JIS)-accredited SUS310S was used as the base material. This base material was formed with a path of fuel or oxidant by being subjected to press-forming, so as to be shaped into a separator.

After rinsing the separator formed by press-forming with acid, plasma nitriding was carried out by microwave pulse direct-current glow discharge on both sides of the vacuum annealing material. At the occasion of the plasma nitriding, the nitriding in Examples 8 and 9 was carried out selectively on the flat portion of the base material by using either the mask M1 or M2 shown in Figs. 10 and 11, respectively. In Example 10, the nitriding was made on both the flat portion and the flow passage portion of the base material. As for the plasma nitriding conditions, nitriding temperature was 300 to 500 °C, nitriding time was 60 minutes, gas mixing ratios in nitriding was N2:H2 = 7:3 and a processing pressure was 3 Torr (or 399 Pa). Note that plasma nitriding was not performed in Comparative Example 4.

Table 7 shows amounts of Cr, Ni and Mo contained in the used stainless steel base material, whether or not the plasma nitriding was carried out, the used plasma power supply, a controlling temperature during nitriding, and whether or not masking was carried out.

TABLE 7

| | | Composition of Base Material (wt%) (balance Fe) | | | Nitriding Method | Used Plasma Power Supply | Surface Temperature of Specimen | Masking Method |
|---|---|---|---|---|---|---|---|---|
| | | Cr | Ni | Mo | - | - | °C | |
| Example 8 | SUS310S | 25.0 | 20.0 | 0.0 | plasma nitriding | microwave pulse | 425 | FIG. 10 |
| Example 9 | SUS310S | 25.0 | 20.0 | 0.0 | plasma nitriding | microwave pulse | 425 | FIG. 11 |
| Example 10 | SUS310S | 25.0 | 20.0 | 0.0 | plasma nitriding | microwave pulse | 425 | none |
| Comparative Example 4 | SUS310S | 25.0 | 20.0 | 0.0 | none | -- | -- | none |

Each of the thus obtained specimens was evaluated according to the following method, starting with the identification of the crystal structure of the nitride layer.

Crystal structure of the nitride layer of the specimen obtained in the above method was identified by making X-ray diffraction measurement on the surface of the base material modified by nitriding. X-ray diffraction device (XRD) made by Mac Science Co., Ltd. was used as a device. Measurements were performed under conditions where a radiation source was CuKa ray, a diffraction angle was between 20 and 100 degrees and a scan speed was 2 degrees/min.

Observation of the nitride layer and identification of the crystal structure was performed. A thin layer specimen was prepared from the specimen using a focused ion beam device (FIB) available from Hitachi, Ltd. under the trade name of FB2000A in a FIB-$\mu$ sampling method, and then was observed by using a field emission transmission electron microscope (available from Hitachi, Ltd. under the trade name of HF-2000) at 200kV.

Nitrogen content and oxygen content in the nitride layer, in other words, nitrogen content and oxygen content in the outermost layer of the nitride layer, were measured from the surface to the depth of 200nm of the nitride layer by depth profile in Auger electron spectroscopic analysis, concerning Fe, Ni, Cr, N and O at depths of 0nm (i.e., the outermost surface), 2nm, 5nm, 10nm, 50nm and 100nm. The measurement was conducted by using a scanning Auger electron spectrometry equipment available from PHI, Inc. under the trade name of MODEL4300, under the following conditions: 1 ) an electron beam acceleration voltage of 5 kV; 2) a measuring region of 20 $\mu$m$\times$16 $\mu$m; 3) an ion gun accelerating voltage of 3 kV; and 4) a sputtering rate of 10nm/min ($SiO_2$ converted value).

The specimen obtained in the above-mentioned Examples 1 to 6 and Comparative Examples 1 to 4 was cut to have a size of 30 mmx30 mm, and then its contact resistance was measured. Device and conditions used in this contact resistance measurement were the same as those of the above-discussed contact resistance value measurements conducted on Examples 1 to 6.

Evaluation of corrosion resistance was conducted by constant-potential electrolysis testing, that is, an electrochemical method, upon being held for a certain period of time in a state where predetermined constant electric potential was applied thereto.

Thereafter, amounts of metallic ion elution within a solution were measured by X-ray fluorescence analysis. From values of amounts of metallic ion elution, the degree of deterioration of corrosion resistance was evaluated.

More specifically, a specimen having a size of 30 mmx30 mm was prepared in such a manner as to be taken from the center of each specimen. The thus prepared specimen was immersed for 100 hours in a sulfuric acid aqueous solution of pH 2 at a temperature of 80° C. At this time, a surrounding was made in such a manner as to purge $N_2$ gas, simulating the anode environment, and so as to be brought into a state open to the atmospheric air, simulating the cathode environment. Thereafter, amounts of Fe, Cr and Ni ion elution within the sulfuric acid aqueous solution were measured by X-ray fluorescence analysis.

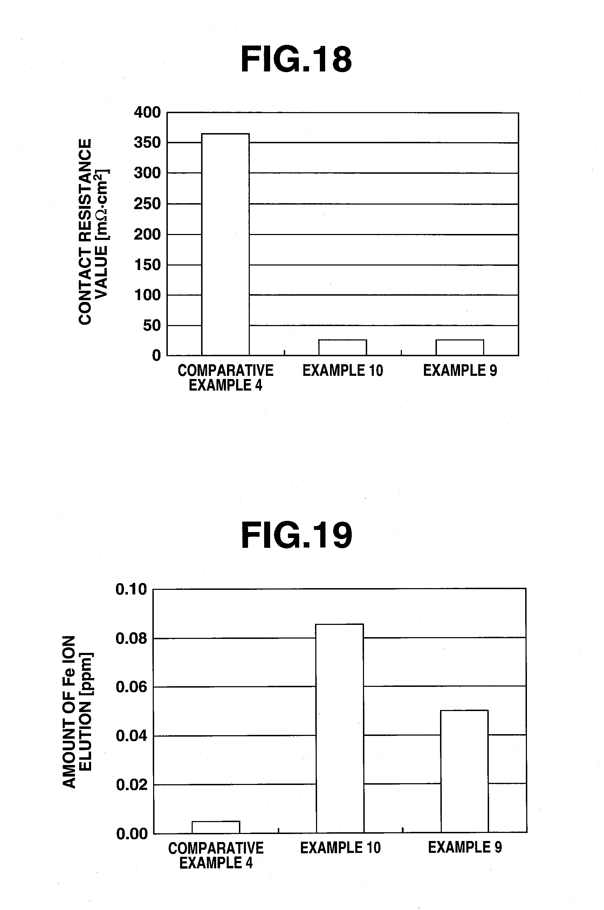

Tables 8 and 9 show measurement results in Examples 8 to 10 and Comparative Example 4, the measurement being conducted concerning the crystal structure of the nitride compound, amounts of Fe, Ni, Cr, N and O at a depth of 5nm, which were obtained by depth profile in Auger electron spectroscopic analysis, contact resistance values obtained before and after an immersion test and amounts of Fe, Cr and Ni ion elution within a test solution. Additionally, regarding Examples 9 and 10 and Comparative Example 4, FIGS. 18 and 19 show a contact resistance value and an amount of Fe ion elution, respectively, after the corrosion resistance test in an anode environment.

TABLE 8

| | GDL Contact Portion (Flat Portion) | | | | | | | Gas Flow Passage (Flow Passage Portion) | | | | | |
|---|---|---|---|---|---|---|---|---|---|---|---|---|---|
| | Crystal Structure of Nitride Layer | | Auger Concentration at a depth of 5nm | | | | | | Auger Concentration at a depth of 5nm | | | | |
| | Second Layer | First Layer | Fe | Ni | Cr | N | O | Crystal Structure | Fe | Ni | Cr | N | O |
| Ex. 8 | MN | $M_4N$(fcc)+ $M_{2-3}N$(hcp) lamination | 16.3 | 8.9 | 16.6 | 28.5 | 16.3 | fcc ($\gamma$) | 36.3 | 5.9 | 9.8 | 1.9 | 39.5 |
| Ex. 9 | MN | $M_4N$(fcc)+ $M_{2-3}N$(hcp) lamination | 17.9 | 8.1 | 16.0 | 26.8 | 14.8 | fcc ($\gamma$) | 36.3 | 5.9 | 9.8 | 3.2 | 39.5 |
| Ex. 10 | MN | $M_4N$(fcc)+ $M_{2-3}N$(hcp) lamination | 17.1 | 8.8 | 16.4 | 27.3 | 17.5 | same as Flat Portion | 17.3 | 9.2 | 15.9 | 27.8 | 18.1 |
| Comp Ex. 4 | MN | fcc ($\gamma$) | 37.1 | 6.8 | 9.4 | 1.5 | 37.5 | fcc ($\gamma$) | 36.5 | 5.9 | 8.7 | 1.4 | 38.5 |

TABLE 9

| | Anode Conditions (N$_2$ Gas Purge) | | | | | Cathode Conditions (Open to Atmosphere) | | | | |
|---|---|---|---|---|---|---|---|---|---|---|
| | Contact Resistance Value (mΩcm$^2$) | | Amount of Ion Elution (ppm) | | | Contact Resistance Value (mΩcm$^2$) | | Amount of Ion Elution (ppm) | | |
| | Before Corrosion Resistance Test | After Corrosion Resistance Test | Fe | Ni | Cr | Before Corrosion Resistance Test | After Corrosion Resistance Test | Fe | Ni | Cr |
| Ex. 8 | 15.9 | 26.3 | 0.035 | 0.036 | <0.001 | 15.9 | 26.0 | <0.001 | <0.001 | <0.001 |
| Ex. 9 | 16.9 | 26.2 | 0.050 | 0.040 | <0.001 | 16.2 | 24.3 | <0.001 | <0.001 | <0.001 |
| Ex. 10 | 23.1 | 26.2 | 0.086 | <0.001 | <0.001 | 25.7 | 28.8 | <0.001 | <0.001 | <0.001 |
| Comp. Ex. 4 | 242.7 | 365.3 | 0.005 | 0.001 | <0.001 | 261.4 | 906.5 | 0.005 | 0.005 | 0.002 |

As shown in Tables 8 and 9 and FIGS. 18 and 19, the specimen of Comparative Example 4 does not have the nitride layer on the base layer while having a thick passive state film on its surface. Therefore, high contact resistance values were maintained both before and after the immersion test made under the anode conditions and the cathode conditions. As to ion elution, Fe, Ni and Cr ion elution hardly occur in the immersion test made under the anode conditions and the cathode conditions due to the thick passive state film formed on the surface.

Meanwhile, the specimens of Examples 8 and 9 in which the nitride layer is selectively formed on the flat portion have a low contact resistance value after the immersion test made under the anode conditions and the cathode conditions while having a low Fe, Ni and Cr ion elution. Without being bound to any theory, the low contact resistance results in that the flat portion in contact with GDL is covered at its surface with the nitride layer to facilitate electron's movement or to improve electrical conductivity between the base layer and the nitride layer. Further, the surface of the flow passage portion is covered with a passive state film that is thick and stable and formed of stainless steel. With this, it is difficult for electron movement to be interrupted even at a high temperature of 80 to 90°C and in a strong acidic atmosphere, in other words, even in a fuel cell separator environment, so that it is considered to improve an ion elution ability and corrosion resistance.

Regarding each specimen of Examples 8 to 10, the first layer of the nitride layer had at the portion brought into contact with GDL, a complex structure in which $M_4N$-type or $M_{2-3}N$-type depositions were laminated on an $M_4N$ matrix and on the surface of the base material at several tens to several hundreds intervals, as shown in Table 8.

Moreover, the specimen of Example 10 was formed with the nitride layer by using the microwave pulse plasma power; plasma nitriding applied thereto was conducted without masking. Therefore, the GDL contact portion is formed with the nitride layer. Contact resistance value after the immersion test made under the anode conditions and the cathode conditions did not increase so as to be excellent in electrical conductivity. However, the passive state film as shown in Examples 8 and 9 was not formed at the gas flow passage, so that amounts of Fe, Cr and Ni ion elution in the immersion test made under the anode conditions and the cathode conditions were increased as compared with those of Examples 8 and 9.

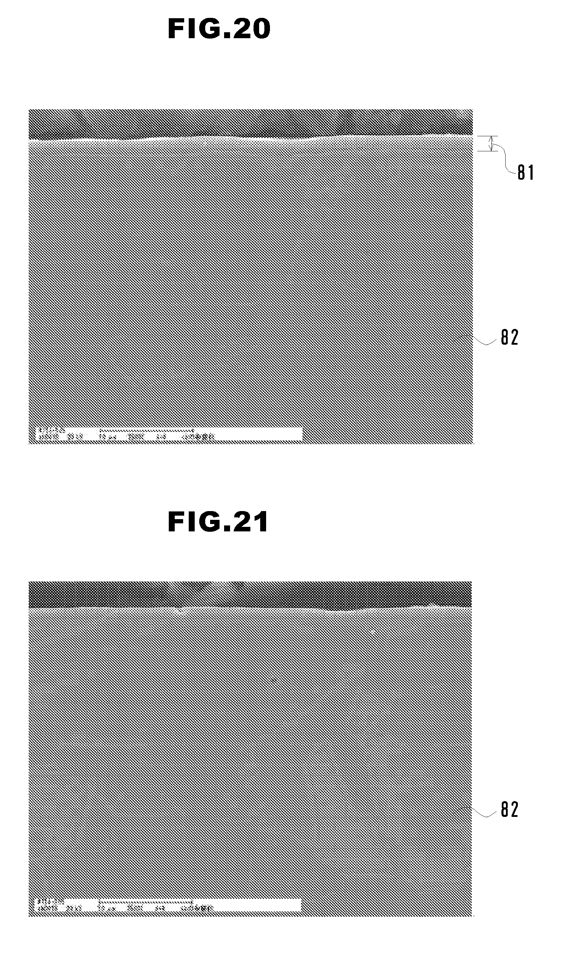

FIGS. 20 and 21 are photographs showing cross section of a separator of Example 9. FIG. 20 shows a cross section near a surface of a flat portion of the fuel cell separator. FIG. 21 shows a cross section near a bottom of a flow passage portion of the fuel cell separator. As shown in FIG. 20, the flat portion of the fuel cell separator has a nitride layer 81 on a base layer 82. Meanwhile, as shown in FIG. 21, the bottom of the fuel cell separator does not have the nitride layer 81, though there is the base layer 82 therein. That is because masking was conducted in Example 9 at the time of plasma nitriding so as to selectively form the nitride layer on the flat portion of the fuel cell separator.

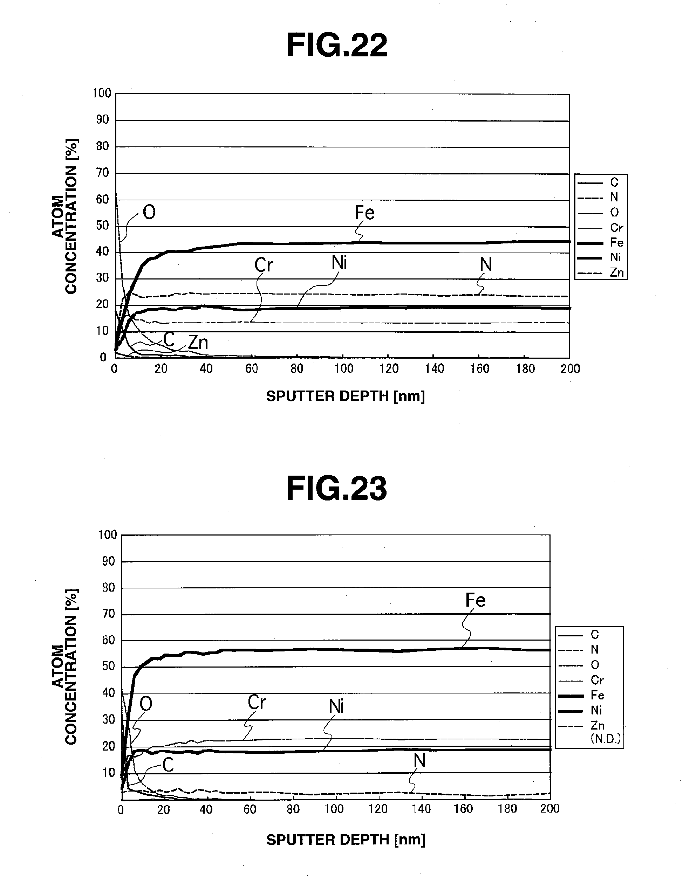

FIGS 22 and 23 show results of a scanning Auger electron spectroscopic analysis conducted on the fuel cell separator of Example 9. FIG. 22 show the result of the analysis conducted on the flat portion of the fuel cell separator. FIG. 23 shows the result of the analysis conducted on the bottom of the flow passage portion of the fuel cell separator.

Based on the results of the scanning Auger electron spectroscopic analysis conducted on the flat portion, a peak is confirmed in which both Cr and N are concentrated as compared with the base layer at a depth of 5nm from the surface of the flat portion. Therefore, the peak is found to denote a nitride having $Cr_2N$-type, CrN-type, $M_{2-3}N$-type and/or $M_4N$-type crystal structure where Cr and N are concentrated. It is also found that the nitride layer has such a composition distribution that a Cr concentration is continuously changed from the first layer to the second layer in the thickness direction of them.

Based on the result of analysis as shown in FIG. 23, it is found that concentrations of Fe and O are high at a depth of 5nm from the surface of the gas flow passage and that the passive state film is formed.

The above-described embodiments have been described in order to allow easy understanding of the invention and do not limit the invention. On the contrary, the invention is intended to cover various modifications and equivalent arrangements included within the scope of the appended claims, which scope is to be accorded the broadest interpretation so as to encompass all such modifications and equivalent structure as is permitted under the law.

This application claims priority from Japanese Patent Application Nos. 2006-222989, filed 18th August 2006, and 2007-141014, filed 28th May 2007, the contents of which are expressly incorporated herein in by reference.

**Claims**

1.   A transition metal nitride comprising:

   a first layer formed of a nitride of a stainless steel containing at least Fe and Cr; and
   a second layer formed on the first layer and having an exposed surface, the second layer being formed of another nitride having a different composition from that of the first layer;

   wherein the first and second layers have a composition distribution in which a Cr concentration is varied from the first layer to the second layer in a thickness direction of the layers; and
wherein the second layer has, at the exposed surface thereof, a nitride deposition protruding from a base portion of the exposed surface.

2. A transition metal nitride as claimed in claim 1 wherein the nitride deposition has a height within a range of 10 to 400nm.

3. A transition metal nitride as claimed in claim 1 or claim 2 wherein the nitride deposition comprises at least one material selected from the group consisting of MN type, $M_{2-3}N$ type and $M_4N$ type crystal structures, wherein M represents a metal element and N represents nitrogen.

4. A transition metal nitride as claimed in any preceding claim wherein the first layer has at least an $M_4N$ type crystal structure where a nitrogen atom is located in an octahedral gap at a center of an unit cell of a face-centered cubic lattice formed of at least one transition metal atom selected from the group consisting of Fe, Cr, Ni and Mo, the at least one transition metal atom contained as stainless steel components.

5. A fuel cell separator comprising:

   a base layer formed of a stainless steel containing at least Fe and Cr; and
   a nitride layer formed comprising a transition metal nitride as claimed in claim 1;

   wherein the nitride layer is formed on the base layer, the first layer of the transition metal nitride is directly connected to the base layer, a crystal lattice of the first layer is continuously connected to that of the base layer, a crystal orientation of the first layer is the same as that of the base layer, and a crystal grain of the first layer is continuously connected to that of the base layer.

6. A fuel cell separator as claimed in claim 5 wherein the stainless steel comprises an austenitic stainless steel having a Ni content of no less than 8 wt%.

7. A fuel cell separator as claimed in claim 5 or claim 6 comprising:

   a channel-like flow passage portion through which a fluid used in a fuel cell is passable;
   a flat portion formed adjacent to the flow passage portion and contactable with a gas diffusion layer of the fuel cell, the nitride layer being selectively formed on a surface of the flat portion; and
   a passive state film of the stainless steel of the base layer formed on a surface of the flow passage portion.

8. A method, comprising:

   carrying out a plasma nitriding on a surface of a base material formed of a stainless steel containing at least Fe and Cr while holding the surface at a temperature no less than 425°C, thereby forming a first layer and a second layer, the first layer having at least a $M_4N$ type crystal structure where a nitrogen atom is located in an octahedral gap at a center of an unit cell of a face-centered cubic lattice formed of at least one transition metal atom selected from the group consisting of Fe, Cr, Ni and Mo, the at least one transition metal atom contained as stainless steel components, and the second layer having a deposition protruding from a surface of the base material and continuously connected to the first layer.

9. A method as claimed in claim 8, wherein carrying out the plasma nitriding comprises using a microwave pulse plasma power configured to repeat discharge and interruption of plasma in a cycle of 1 to 1000 μsec.

10. A method as claimed in claim 8 or claim 9 comprising carrying out a press-forming of the base material to form a channel-like flow passage portion and a flat portion, a fluid used in a fuel cell being passable through the flow passage portion, the flat portion being formed adjacent to the flow passage portion.

11. A fuel cell stack comprising a plurality of fuel cell separators as claimed in any of claims 5-7 alternatively stacked with a plurality of membrane electrode assemblies.

12. A vehicle comprising a fuel cell stack as claimed in claim 11.

# FIG.1

EP 1 890 353 A1

**FIG.2**

# FIG.3

**FIG.4A**

10(3)

101 101
102

IIIb

IIIb

**FIG.4B**

102
101 11

IIIc

IIIc 12

**FIG.4C**

11a(10a)
112
111 } 11
12

10

# FIG.5

## FIG.6A

## FIG.6B

**FIG.7A**

**FIG.7B**

○ M
● N

# FIG.8

# FIG.9

**FIG.10A**

**FIG.10B**

**FIG.11A**

**FIG.11B**

# FIG.12A

# FIG.12B

**FIG.13A**

**FIG.13B**

# FIG.14

# FIG.15

## FIG.16A

$[\bar{2}\ 1\ 1\ 0]\varepsilon\text{-Fe}_{2-3}\text{N}$

## FIG.16B

## FIG.17A

## FIG.17B

# FIG.18

# FIG.19

# FIG.20

81

82

# FIG.21

82

# FIG.22

# FIG.23

**European Patent Office**

**EUROPEAN SEARCH REPORT**

Application Number

EP 07 11 4295

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | US 2006/040165 A1 (UCHIYAMA NORIKO [JP] ET AL) 23 February 2006 (2006-02-23)<br>* paragraphs [0019], [0052] - [0055], [0070], [0062] - [0065], [0049], [0020], [0021]; figures 11-14; tables 1-3,7,9,11 * | 1-6,8, 10-12<br>7 | INV.<br>H01M8/02 |
| A | EP 1 602 743 A (RIKEN KK [JP]; ORIENTAL ENGINEERING CO LTD [JP])<br>7 December 2005 (2005-12-07)<br>* abstract *<br>* paragraphs [0015], [0017], [0027]; figure 7 * | 1,2 | |
| A | GB 229 325 A (BRITISH THOMSON HOUSTON CO LTD) 31 December 1925 (1925-12-31)<br>* abstract *<br>* page 8, line 35 - page 9, line 5 * | 1,2 | |
| Y | WO 2005/081614 A (REINZ DICHTUNG GMBH [DE]; STROEBEL RAIMUND [DE]; QUICK LOTHAR [DE]; SC) 9 September 2005 (2005-09-09)<br>* abstract *<br>* page 10, lines 21-28 *<br>* page 4, lines 21,22; figure 1a *<br>* page 5, line 28 - page 6, line 2 *<br>* page 6, lines 14-27 *<br>* page 9, line 34 - page 10, line 9 *<br>* page 10, lines 22-26 * | 7 | TECHNICAL FIELDS SEARCHED (IPC)<br><br>H01M<br>C23C |
| A | JP 61 047068 A (MATSUSHITA ELECTRIC IND CO LTD) 7 March 1986 (1986-03-07)<br>* the whole document * | 7 | |

The present search report has been drawn up for all claims

| Place of search | Date of completion of the search | Examiner |
|---|---|---|
| Munich | 14 November 2007 | Perego, Raffaella |

EPO FORM 1503 03.82 (P04C01)

## ANNEX TO THE EUROPEAN SEARCH REPORT
## ON EUROPEAN PATENT APPLICATION NO.

EP 07 11 4295

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2007

| Patent document cited in search report | | Publication date | Patent family member(s) | | Publication date |
|---|---|---|---|---|---|
| US 2006040165 | A1 | 23-02-2006 | JP 2006134855 A | | 25-05-2006 |
| EP 1602743 | A | 07-12-2005 | CN 1784505 A<br>WO 2004081252 A1<br>KR 20050118175 A<br>US 2006144359 A1 | | 07-06-2006<br>23-09-2004<br>15-12-2005<br>06-07-2006 |
| GB 229325 | A | 31-12-1925 | NONE | | |
| WO 2005081614 | A | 09-09-2005 | DE 102004009869 A1<br>EP 1721351 A2 | | 15-09-2005<br>15-11-2006 |
| JP 61047068 | A | 07-03-1986 | NONE | | |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 102289214 B
- JP 2001006713 A
- JP 2006222989 A
- JP 2007141014 A

**Non-patent literature cited in the description**

- **YASUMARU ; KAMACHI.** *Journal of Japan Institute of Metals,* 1986, vol. 50, 362-368